# EUROPÄISCHE PATENTANMELDUNG

(11) **EP 1 736 935 A2**
(43) Veröffentlichungstag der Anmeldung: **27.12.2006**
(21) Anmeldenummer: 06076148.3
(22) Anmeldetag: 31.05.2006
(51) Int. Cl.: G07B 17/00

(54) **Verfahren zum Zuordnen einer Information zu einem Poststück**

(30) Priorität: 31.05.2005 DE 102005025323
(71) Anmelder: Francotyp-Postalia GmbH, 16547 Birkenwerder (DE)
(72) Erfinder: Kampert, Werner, DE-22081 Hamburg (DE)
(74) Vertreter: Karlhuber, Mathias

(57) **Zusammenfassung**

Verfahren zum Zuordnen einer Information zu einem Poststück, insbesondere zu einem Brief, bei dem in einem Zuordnungsschritt dem Poststück eine elektronische erste Speichereinrichtung (9.4, 9.5) zugeordnet wird und in einem Speicherschritt eine erste lhformation in die erste Speichereinrichtung (9.4, 9.5) eingebracht wird.

## Beschreibung

Die vorliegende Erfindung betrifft Verfahren zum Zuordnen einer Information zu einem Poststück, insbesondere zu einem Brief. Sie betrifft weiterhin Verfahren zur Beförderung von Poststücken, eine im Zusammenhang damit verwendbare Datenverarbeitungseinrichtung, ein System zur Beförderung von Poststücken sowie ein entsprechendes Poststück.

Bei den derzeit verwendeten Postbeförderungssystemen werden die zu versendenden Poststücke, wie Briefe und Pakete, üblicherweise mit einer Wertmarke oder einem entsprechenden Frankierabdruck versehen, der unter anderem als Beleg für die Entrichtung der erforderlichen Beförderungsgebühren des gewählten Postbeförderers dient. Die Wertmarke bzw. der Frankierabdruck enthält hierzu in der Regel eine Reihe von graphischen Verifizierungsmerkmalen, z. B. alphanumerischen Zeichen, Barcodes etc., oder anderweitige physische Verifizierungsmerkmale (Farben, Materialien, Texturen etc.), die in codierter oder uncodierter Form Informationen enthalten, welche es - gegebenenfalls in Kombination - ermöglichen, nachzuvollziehen, ob die Beförderungsgebühren entrichtet wurden.

Nachdem das Poststück dem Postbeförderer übergeben wurde, verwendet dieser die Wertmarke bzw. den Frankierabdruck, um zu verifizieren, ob die für die Beförderung erforderlichen Gebühren entrichtet wurden. Ist die Verifizierung erfolgreich, übernimmt er den Transport des Poststücks zum gewünschten Ort, andernfalls verweigert er diesen gegebenenfalls.

Bei der Verifizierung der Wertmarke bzw. des Frankierabdrucks ist der Postbeförderer bisher an eine optische Erfassung der Verifizierungsmerkmale der Wertmarke bzw. des Frankierabdrucks gebunden. Dabei findet im Interesse einer schnellen Verarbeitung der Poststücke in der Regel eine automatisierte optische Erfassung der Verifizierungsmerkmale statt. Insbesondere ist es hierfür erforderlich, die Poststücke aufwändig zu vereinzeln und jedes Poststück einzeln optisch zu erfassen. Schlägt die automatisierte optische Erfassung fehl, muss eine sehr zeit- und personalaufwändige visuelle Überprüfung erfolgen.

Bei der Verifizierung der Wertmarke bzw. des Frankierabdrucks besteht häufig das Problem, dass auf dem Poststück abgedruckte graphische Verifizierungsmerkmale nicht zuverlässig automatisiert gelesen werden können, sodass die aufwändige visuelle Überprüfung durch entsprechendes Personal erfolgen muss. Ursache hierfür kann eine mangelnde Qualität des den Abdruck erzeugenden Druckers aber auch eine ungeeignete, beispielsweise zu dunkle Unterlage sein, auf welcher kein für die automatische Erfassung ausreichender Kontrast des an sich korrekten Abdrucks erzielt wird. Ferner kann der Abdruck ganz oder teilweise zerstört sein, z. B. durch Einwirkung von Feuchtigkeit, durch Reißen des Papiers etc.

Der vorliegenden Erfindung liegt daher die Aufgabe zu Grunde, ein Verfahren, eine Datenverarbeitungseinrichtung sowie ein Poststück der eingangs genannten Art zur Verfügung zu stellen, welches bzw. welche die oben genannten Nachteile nicht oder zumindest in geringerem Maße aufweist und insbesondere eine einfache, schnelle und zuverlässige automatisierte Erfassung der mit dem Poststück verknüpften Information ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 14 durch die im kennzeichnenden Teil des Anspruchs 14 angegebenen Merkmale. Sie löst diese Aufgabe weiterhin ausgehend von einer Datenverarbeitungseinrichtung gemäß dem Oberbegriff des Anspruchs 21 durch die im kennzeichnenden Teil des Anspruchs 21 angegebenen Merkmale. Sie löst diese Aufgabe weiterhin ausgehend von einem System gemäß dem Oberbegriff des Anspruchs 34 durch die im kennzeichnenden Teil des Anspruchs 34 angegebenen Merkmale. Sie löst diese Aufgabe schließlich ausgehend von einem Verfahren gemäß dem Oberbegriff des Anspruchs 44 durch die im kennzeichnenden Teil des Anspruchs 44 angegebenen Merkmale.

Der vorliegenden Erfindung liegt die technische Lehre zu Grunde, dass eine einfache, schnelle und zuverlässige automatisierte Erfassung der mit dem Poststück verknüpften Information möglich ist, wenn dem Poststück ein elektronischer Speicher zugeordnet wird, in dem die betreffende Information gespeichert wird. Erfindungsgemäß wird daher in einem Zuordnungsschritt dem Poststück eine elektronische erste Speichereinrichtung zugeordnet und in einem Speicherschritt eine erste Information in die erste Speichereinrichtung eingebracht. Die Information kann dann zu einem späteren Zeitpunkt problemlos und zuverlässig aus dem Speicher ausgelesen und weiter verarbeitet werden. So kann der Speicher beispielsweise Informationen hinsichtlich der Zahlung des Beförderungsentgeltes für das Poststück enthalten. Diese können dann zur Verifikation der Zahlung einfach aus dem Speicher ausgelesen und weiter verarbeitet werden.

Das Beschreiben bzw. Auslesen der ersten Speichereinrichtung kann auf beliebige geeignete Weise erfolgen. So kann es die erste Speichereinrichtung eine entsprechende durch ein Schreibgerät bzw. Lesegerät zu kontaktierende Schnittstelle aufweisen, über welche zum Schreiben bzw. Lesen der ersten Information die Verbindung zur ersten Speichereinrichtung hergestellt werden kann. Bevorzugt, erfolgt das Schreiben bzw. Lesen der ersten Information berührungslos, da dann eine besonders einfache Automatisierung des betreffenden Vorgangs möglich ist. Vorzugsweise ist daher vorgesehen, dass die erste Information in dem Speicherschritt über eine drahtlose Verbindung in die erste Speichereinrichtung eingebracht wird.

Ein besonderer Vorteil liegt dabei in der Tatsache, dass bei einer drahtlosen Verbindung zwischen dem Schreibgerät bzw. Lesegerät und der ersten Speichereinrichtung gegebenenfalls abhängig von der gewählten Technologie der drahtlosen Verbindung eine deutlich ungenauere räumliche Positionierung vorhanden sein muss, als es bei den bisher bekannten Verfahren der Fall ist, bei denen zum Verknüpfen der Information ein Druckbild oder dergleichen auf einen Träger aufgebracht wird bzw. zum Lesen der Information das Druckbild oder dergleichen auf optischem Wege erfasst wird. Die zugehörigen Schreibgeräte bzw. Lesegeräte vereinfachen sich dadurch gegebenenfalls erheblich, da nur eine vergleichsweise grobe Positionierung der ersten Speichereinrichtung erforderlich ist. Damit erhöht sich auch die Bearbeitungsgeschwindigkeit in vorteilhafter Weise.

Die erste Speichereinrichtung kann grundsätzlich in beliebiger geeigneter Weise gestaltet sein, solange sie bei entsprechend geringer Größe und geringem Gewicht eine zuverlässige Speicherung der eingebrachten ersten Information sicherstellt. Es kann sich bei ihr sowohl um eine aktive als auch um eine passive Speichereinrichtung handeln, die ein oder mehrere Speichermodule umfasst. Bevorzugt ist sie als nichtflüchtiger Speicher ausgebildet, sodass die erste Information auch über einen längeren Zeitraum ohne Energieversorgung erhalten bleibt. Bevorzugt ist sie weiterhin nach Art eines aktiven oder passiven Transponders ausgebildet, der durch eine eigene Energiequelle (aktiver Transponder) bzw. eine externe Energiequelle (passiver Transponder) mit der erforderlichen Energie, beispielsweise für Schreib- oder Lesevorgänge versorgt wird. Bevorzugt umfasst die erste Speichereinrichtung daher wenigstens eine beschreibbare RFID Speichereinheit.

Die erste Speichereinrichtung kann auf beliebige geeignete Weise mit dem Poststück verbunden werden. So kann die Speichereinrichtung mit einem Teil des Poststücks verklebt oder anderweitig mechanisch verbunden sein, insbesondere in einen Bestandteil des Poststücks integriert bzw. eingebettet sein. So kann vorgesehen sein, dass das Poststück eine Außenhülle umfasst und die erste Speichereinrichtung in dem Zuordnungsschritt mit der Außenhülle verbunden wird. Bei anderen Varianten der Erfindung kann vorgesehen sein, dass das Poststück eine Außenhülle und ein darin aufgenommenes Versandgut umfasst und die erste Speichereinrichtung in dem Zuordnungsschritt mit dem Versandgut verbunden wird.

Der Zuordnungsschritt und der Speicherschritt können in beliebiger zeitlicher Zuordnung zueinander erfolgen. Insbesondere können sich diese beiden Schritte ganz oder teilweise zeitlich überlappen. Bevorzugt erfolgt der Zuordnungsschritt zeitlich vor dem Speicherschritt. So kann die Außenhülle, beispielsweise ein gegebenenfalls unbeschriebener Briefumschlag, und/oder ein Bestandteil des Versandgutes, beispielsweise ein gegebenenfalls unbeschriebener Bogen Briefpapier, bereits vorab mit der Speichereinrichtung versehen werden, bevor das Poststück zusammengestellt wird. Dann kann das Beschreiben der ersten Speichereinrichtung im Zuge der Generierung und Zusammenstellung des Poststücks erfolgen. Dies hat den Vorteil, dass die Generierung und Zusammenstellung des Poststücks in der bisher bekannten Weise und ohne zusätzliche Handhabungsschritte für die Zuordnung der ersten Speichereinrichtung erfolgen kann.

Der Speicherschritt kann in einem beliebigen Umfeld bzw. an einem beliebigen Ort erfolgen, an dem eine entsprechende Schreibeinrichtung angeordnet ist. Befindet sich die erste Speichereinrichtung beispielsweise auf einem Bogen Papier, so kann der Speicherschritt beispielsweise in einem Drucker erfolgen, der zum Bedrucken des Papiers verwendet wird und eine Schreibeinrichtung zum Beschreiben der ersten Speichereinrichtung aufweist. Dies hat den Vorteil, dass beim Bedrucken zwischen dem Drucker und dem Papier und damit auch der ersten Speichereinrichtung eine genau definierte räumliche Beziehung vorliegt, welche ein einfaches und zuverlässiges Beschreiben der ersten Speichereinrichtung gewährleistet.

Bevorzugt erfolgt der Speicherschritt, während die erste Speichereinrichtung einer Frankiermaschine räumlich zugeordnet ist, die eine Schreibeinrichtung zum Beschreiben der ersten Speichereinrichtung aufweist. Hierbei kann dann dank der in der Frankiermaschine vorliegenden ausreichend genau definierten räumlichen Beziehung der ersten Speichereinrichtung zur Frankiermaschine sowohl eine mit der Außenhülle, beispielsweise einem Briefumschlag, als auch eine mit einem ein Bestandteil des Versandgutes, beispielsweise einem Bogen Briefpapier, verbundene Speichereinrichtung beschrieben werden. Zudem hat dies den Vorteil, dass die ohnehin in der Regel in einem Sicherheitsmodul der Frankiermaschine generierten Nachweisdaten für die erfolgte Portozahlung in einfacher Weise in die Speichereinrichtung eingeschrieben werden können.

Bei bevorzugten Varianten des erfindungsgemäßen Verfahrens wird in einem Druckschritt ein dem Poststück zugeordneter, eine zweite Information umfassender Frankierabdruck erzeugt. Der Frankierabdruck kann dann, beispielsweise im Fall der Feststellung einer möglichen Inkonsistenz der in der ersten Speichereinrichtung gespeicherten ersten Daten, herangezogen werden, um die Integrität und/oder Authentizität der ersten Daten zu überprüfen. Hierzu ist bevorzugt vorgesehen, dass die erste Information und die zweite Information in einer vorbestimmten Beziehung zueinander stehen. Vorzugsweise umfasst die erste Information dabei wenigstens eine erste Teilinformation, während die zweite Information wenigstens eine zweite Teilinformation umfasst, wobei die erste Teilinformation in einer vorbestimmten Beziehung zur zweiten Teilinformation steht, insbesondere identisch mit der zweiten Teilinformation ist.

Es können grundsätzlich beliebige Daten bzw. Informationen in die erste Speichereinrichtung eingeschrieben werden. Bevorzugt umfasst die erste Information wenigstens eine dem Poststück zugeordnete erste Teilinformation. Bei dieser dem Poststück zugeordneten ersten Teilinformation handelt es sich im Sinne der vorliegenden Erfindung um eine Information, welche sich auf bestimmte Merkmale des Poststücks bezieht bzw. diese wiedergibt. Bei diesen Merkmalen des Poststücks kann es sich um physische Merkmale wie Gewicht, Maße etc. handeln. Ebenso kann es sich aber auch um informationstechnische Merkmale, wie beispielsweise Absender, Empfänger, gewähltes Postbeförderer, aber auch den physischen oder informationstechnischen Inhalt des Poststücks handeln. Mit dieser ersten Teilinformation ist es möglich, anhand von erfassbaren Merkmalen des Poststücks zu verifizieren, ob die in der ersten Speichereinrichtung gespeicherte erste Information tatsächlich den vorgegebenen Bezug zum Poststück aufweist.

Bei der ersten Teilinformation kann es sich beispielsweise um alle oder Teile der Daten handeln, die üblicherweise in einem modernen Frankierabdruck enthalten sind, wie er beispielsweise von der Deutsche Post AG gemäß deren FRANKIT® Spezifikationen oder von dem United States Postal Service (USPS) gemäß dessen Information Based Indicium Program (IBIP) Spezifikationen vorgeschrieben wird. Ebenso kann es sich aber wie erwähnt um eine Information zum informationstechnischen Inhalt des Poststücks bis hin zum vollständigen informationstechnischen Inhalt des Poststücks, beispielsweise also den gesamten Text eines Briefes, handeln.

Vorzugsweise ist daher vorgesehen, dass die erste Information als eine erste Teilinformation eine auf wenigstens einen portorelevanten Parameter (Gewicht, Größe, Versandart etc.) des Poststücks bezogene Information umfasst. Zusätzlich oder alternativ umfasst die erste Information als eine erste Teilinformation eine auf einen Zusatzdienst bei der Beförderung des Poststücks bezogene Information (z. B. Einschreiben, Eilzustellung etc.). Zusätzlich oder alternativ umfasst die erste Information als eine erste Teilinformation eine auf das für die Beförderung des Poststücks entrichtete oder zu entrichtende Porto bezogene Information (z. B. Portobetrag, Währung etc.). Zusätzlich oder alternativ umfasst die erste Information als eine erste Teilinformation eine auf den Absender des Poststücks bezogene Information (z. B. Absender, Absenderadresse oder Teile davon, beispielsweise die Postleitzahl, etc.). Zusätzlich oder alternativ umfasst die erste Information als eine erste Teilinformation eine auf den Empfänger des Poststücks bezogene Information (z. B. Empfänger, Empfängeradresse oder Teile davon, beispielsweise die Postleitzahl, etc.). Zusätzlich oder alternativ umfasst die erste Information als eine erste Teilinformation eine auf den Beförderer des Poststücks bezogene Information (z. B. Beförderer, Einlieferungsstelle etc.). Zusätzlich oder alternativ umfasst die erste Information als eine erste Teilinformation eine auf den Inhalt des Poststücks bezogene Information. Hierbei kann es sich um eine auf den körperlicher Inhalt des Poststücks bezogene Information handeln (z. B. Anzahl der Blätter, Inhalt wie Schecks, Scheckkarten etc.). Ebenso kann es sich wie erwähnt um eine Information handeln, welche sich auf informationstechnischen Inhalt des Poststücks bezieht, beispielsweise bis hin zum gesamten Text eines Briefes.

Zusätzlich oder alternativ umfasst die erste Information als eine erste Teilinformation eine auf den Ort der Durchführung des Speicherschritts und/oder den Zeitpunkt der Durchführung des Speicherschritts und/oder den für die Durchführung des Speicherschritts Verantwortlichen bezogene Information. Die auf den für die Durchführung des Speicherschritts Verantwortlichen bezogene Information kann beispielsweise eine entsprechende Identifikation des Handelnden oder des Verantwortlichen sein. Ebenso kann sie eine entsprechende Identifikation (Seriennummer etc.) der Einrichtung sein, welche den Speicherschritt durchführt. Werden diese Informationen an bestimmten Beförderungsstationen des Poststücks in die erste Speichereinrichtung geschrieben, ist es hiermit in einfacher Weise unter anderem möglich, eine Transporthistorie des Poststücks in der ersten Speichereinrichtung zu speichern, die dann aus diesem zu einem beliebigen Zeitpunkt ausgelesen werden kann. Mit anderen Worten kann hier in einfacher Weise eine nachträgliche Sendungsverfolgung, ein so genanntes Offline Tracking and Tracing, realisiert werden. Dies hat den Vorteil, dass zumindest nicht an allen Beförderungsstationen eine Verbindung zu einem Sendungsverfolgungssystem bestehen muss. Vielmehr kann es z. B. genügen, an einzelnen Beförderungsstationen, gegebenenfalls sogar nur an einer einzigen Beförderungsstation, die bisherige Transporthistorie des Poststücks aus der ersten Speichereinrichtung auszulesen und an das Sendungsverfolgungssystem zu übermitteln.

Bei bevorzugten Varianten der Erfindung umfasst die erste Information als zweite Teilinformation zudem eine die erste Teilinformation authentifizierende Authentifizierungsinformation. Diese kann auf beliebige geeignete Weise generiert worden sein. Beispielsweise kann es sich bei der Authentifizierungsinformation um einen hinlänglich bekannten so genannten Message Authentication Code (MAC) oder eine hinlänglich bekannte digitale Signatur über der ersten Teilinformation handeln.

Die vorliegende Erfindung betrifft weiterhin ein Verfahren zur Beförderung von Poststücken, insbesondere Briefen, bei dem das Poststück in einem ersten Beförderungsschritt wenigstens eine erste Beförderungsstation durchläuft. Erfindungsgemäß wird in einem ersten Speicherschritt eine auf das Durchlaufen der ersten Beförderungsstation bezogene erste Beförderungsstationsinformation in eine dem Poststück zugeordnete elektronische erste Speichereinrichtung eingebracht. Hiermit ist es in einfacher Weise möglich, die oben bereits dargelegte Beförderungshistorie des Poststücks zu erfassen und speichern, d. h. die oben genannte Offline Sendungsverfolgung zu realisieren.

Um die Offline Sendungsverfolgung zu realisieren durchläuft das Poststück vorzugsweise wenigstens eine der ersten Beförderungsstation nachfolgende zweite Beförderungsstation und es wird in einem zweiten Speicherschritt eine auf das Durchlaufen der zweiten Beförderungsstation bezogene zweite Beförderungsstationsinformation in die erste Speichereinrichtung eingebracht.

Die jeweilige Beförderungsstationsinformation umfasst bevorzugt eine auf die Beförderungsstation bezogene Information, insbesondere eine auf den Ort und/oder den Betreiber der Beförderungsstation bezogene Information. Zusätzlich oder alternativ kann sie eine auf den Zeitpunkt des Durchlaufens der Beförderungsstation bezogene Information umfassen.

Die vorliegende Erfindung betrifft weiterhin ein Verfahren zur Beförderung von Poststücken, insbesondere Briefen. Erfindungsgemäß ist dabei vorgesehen, dass in einem Leseschritt eine erste Information aus einer einem Poststück zugeordneten elektronischen ersten Speichereinrichtung gelesen wird und in einem Beförderungsschritt eine Beförderung des Poststücks in Abhängigkeit von dem Ergebnis des Leseschritts erfolgt und/oder in einem Quittierungsschritt eine Quittierungsinformation in Abhängigkeit von dem Ergebnis des Leseschritts generiert wird.

Das oben bereits ausführlich geschilderte einfache und zuverlässige Auslesen der ersten Information aus der dem Poststück zugeordneten ersten Speichereinrichtung ermöglicht dabei in allen drei Fällen eine einfache und schnelle bedarfsgerechte Be- bzw. Verarbeitung der Poststücke ohne die bisherige Unsicherheit eines optischen Lesevorgangs.

Bei der Erstellung der Quittierungsinformation in Abhängigkeit von dem Ergebnis des Leseschritts kann beispielsweise vorgesehen sein, dass eine bestimmte Einrichtung mit einem entsprechenden Lesegerät zum Lesen der in der ersten Speichereinrichtung gespeicherten Information automatisch eine Quittung für den Eingang des Poststücks in Abhängigkeit von dem Ergebnis des Leseschritts generiert. So kann beispielsweise ein Briefkasten, in den Briefe eingeworfen werden, automatisch die in der ersten Speichereinrichtung gespeicherten Information eines solchen Briefes auslesen und anhand dieser ausgelesenen Information eine Quittung für den Eingang des Briefes erstellen. Dabei kann dann vorgesehen sein, dass der Briefkasten eine entsprechende Zeitstempeleinrichtung aufweist, die dann noch den Eingangszeitpunkt des Briefes quittiert. Dies ist insbesondere bei der Briefkasten von Behörden oder Gerichten etc. von Vorteil, in die Briefe mit fristgebundenen Schriftstücken eingeworfen werden können. Besonders vorteilhaft ist es in diesem Zusammenhang dann, wenn die ausgelesene Information, über der die Quittung erstellt wird, dann noch die oben erwähnt Information über den körperlichen und/oder informationstechnischen Inhalt des Briefes umfasst.

Es versteht sich hierbei, dass in allen vor- und nachstehend beschriebenen Fällen, je nach Sicherheitsrelevanz der zu verarbeitenden Daten, bevorzugt entsprechende hinlänglich bekannte Sicherungsmechanismen wie Verschlüsselung, Erstellung von digitalen Signaturen oder anderen Sicherheitscodes etc. Anwendung finden, um die Integrität und Authentizität der verarbeiteten Daten sicherzustellen. Insbesondere versteht es sich, dass derartige Sicherungsmechanismen gegebenenfalls auch in der ersten Speichereinrichtung implementiert sein können.

Bei der Beförderung des Poststücks in Abhängigkeit von dem Ergebnis des Leseschritts kann beispielsweise vorgesehen sein, dass eine Sortierung oder Verteilung der Poststücke in einem Verteilzentrum anhand der in der ersten Speichereinrichtung gespeicherten Information bezüglich des Empfängers und/oder aber auch des Beförderers vorgenommen wird. Insbesondere kann also in einem Postverteilzentrum, in welchem durch unterschiedliche Beförderer zu befördernde Poststücke eingehen - dank der einfach zu lesenden ersten Information - vor, während oder nach der Sortierung nach dem Empfänger auch eine Sortierung nach dem gewählten Beförderer vorgenommen werden.

Bei bevorzugten Varianten des erfindungsgemäßen Verfahrens erfolgt die Beförderung des Poststücks in dem Beförderungsschritt ausgelöst durch das Ergebnis des Leseschritts. So kann beispielsweise vorgesehen sein, dass das Poststück nur dann befördert wird, wenn der Leseschritt zu einem vorgegebenen Ergebnis geführt hat.

Ebenso kann vorgesehen sein, dass die Weiterbeförderung von Poststücken erst erfolgt, wenn durch das Auslesen der ersten Information bzw. im Zuge des Auslesens der ersten Information erfasst wird, dass sich an einem bestimmten Ort eine bestimmte Anzahl von Poststücken angesammelt hat oder wenigstens ein Poststück bereits eine vorgegebenen Zeitdauer an diesem Ort vorhanden ist. Bei bevorzugten Varianten des erfindungsgemäßen Verfahrens ist daher vorgesehen, dass das Lesen der ersten Information in dem Leseschritt durch eine Lagereinrichtung für Poststücke, insbesondere einen Briefkasten, erfolgt und in dem Beförderungsschritt eine Weiterbeförderung der Poststücke aus der Lagereinrichtung ausgelöst wird, sobald in dem Leseschritt das Erreichen einer vorgegebenen Anzahl von Poststücken in der Lagereinrichtung erfasst wird oder eine vorgegebene Zeitspanne seit dem Erfassen des Eingangs des ersten Briefes in der Lagereinrichtung in dem vorangehenden Leseschritt abgelaufen ist.

Wie bereits oben ausführlich dargelegt, kann es sich bei der ersten Speichereinrichtung um eine beliebige geeignete Speichereinrichtung handeln. Bevorzugt umfasst auch hier wiederum die erste Speichereinrichtung wenigstens eine RFID Speichereinheit. Analog zu den obigen Ausführungen wird auch hier bevorzugt die erste Information in dem Leseschritt aus der ersten Speichereinrichtung über eine drahtlose Verbindung ausgelesen. Weiterhin wird die erste Information dem Poststück vor dem Leseschritt bevorzugt mit einem der oben beschriebenen erfindungsgemäßen Verfahren zugeordnet.

In diesem Zusammenhang kann es im Übrigen auch vorgesehen sein, dass der Beförderer bei der Verwendung von Poststücken, die erfindungsgemäß mit einer entsprechend beschriebenen ersten Speichereinrichtung versehen sind, Vergünstigungen hinsichtlich des Beförderungsentgelts anbietet. Bevorzugt ist daher vorgesehen, dass in einem Berechnungsschritt eine Berechnung des Beförderungsentgelts für das Poststück erfolgt, wobei die Berechnung des Beförderungsentgelts in Abhängigkeit von dem Vorhandensein der ersten Speichereinrichtung und/oder dem Informationsgehalt der ersten Information erfolgt.

Die vorliegende Erfindung betrifft weiterhin eine Datenverarbeitungseinrichtung zum Zuordnen einer Information zu einem Poststück, insbesondere zu einem Brief. Erfindungsgemäß weist die Datenverarbeitungseinrichtung dabei eine Schreibeinrichtung zum Beschreiben einer mit dem Poststück verbundenen oder zu verbindenden elektronischen ersten Speichereinrichtung mit einer ersten Information auf. Die erfindungsgemäße Datenverarbeitungseinrichtung lässt sich im Zusammenhang mit den oben beschriebenen Verfahren einsetzen. Mit ihr können die oben beschriebenen Varianten und Vorteile in demselben Maße realisiert werden, sodass diesbezüglich au die obigen Ausführungen verwiesen wird. Ebenso wurde der Inhalt der ersten Information, welche mit der erfindungsgemäßen Datenverarbeitungseinrichtung in die erste Speichereinrichtung geschrieben werden kann, bereits oben beschrieben, sodass insbesondere auch diesbezüglich auf die obigen Ausführungen verwiesen wird.

Bevorzugt ist die Schreibeinrichtung zum Beschreiben der ersten Speichereinrichtung über eine drahtlose Verbindung ausgebildet. Um die oben genannten RFID Speicherelemente und deren Vorteile nutzen zu können ist die Schreibeinrichtung vorzugsweise zum Beschreiben wenigstens einer RFID Speichereinheit der ersten Speichereinrichtung ausgebildet.

Bei der Datenverarbeitungseinrichtung kann es sich um eine beliebige Datenverarbeitungseinrichtung handeln, welche das Poststück auf seinem Transportweg passiert und sich somit zum Schreiben von Information in die erste Speichereinrichtung eignet. Vorzugsweise ist sie als Frankiermaschine ausgebildet. Ebenso kann sie aber auch als Komponente einer Lagereinrichtung für Poststücke, insbesondere als Komponente eines Briefkastens ausgebildet sein. Ebenso kann sie als Komponente einer Transporteinrichtung für Poststücke, insbesondere als Komponente eines Transportfahrzeugs oder einer Sortieranlage, ausgebildet sein. Dies ist insbesondere im Zusammenhang mit der oben genannten Offline Sendungsverfolgung von Vorteil.

Um nicht von vornherein mit einer ersten Speichereinrichtung versehene Poststücke mit einer solchen bestücken zu können, ist bevorzugt vorgesehen, dass das Poststück eine Außenhülle umfasst und die Datenverarbeitungseinrichtung eine Verbindungseinrichtung zum Verbinden der ersten Speichereinrichtung mit der Außenhülle umfasst. Bevorzugt umfasst die Verbindungseinrichtung eine Ausgabeeinrichtung zum Ausgeben von mit dem Poststück zu verbindenden, eine erste Speichereinrichtung tragenden Trägereinrichtungen. Vorzugsweise ist die Ausgabeeinrichtung dabei zum Verbinden der Trägereinrichtung mit dem Poststück, insbesondere zum Verbinden der Trägereinrichtung mit dem Poststück vor dem Beschreiben der ersten Speichereinrichtung, ausgebildet.

Bevorzugt umfasst die erfindungsgemäße Datenverarbeitungseinrichtung eine Druckeinrichtung zum Aufbringen eines eine zweite Information umfassenden Frankierabdrucks auf das Poststück, wie dieser oben beschrieben wurde.

Die vorliegende Erfindung betrifft weiterhin ein System zur Beförderung von Poststücken, insbesondere von Briefen, mit einer Mehrzahl von Systemkomponenten zur Beförderung von Poststücken. Erfindungsgemäß weist eine erste Systemkomponente eine Leseeinrichtung zum Lesen einer ersten Information aus einer einem Poststück zugeordneten elektronischen ersten Speichereinrichtung auf. Die erste Systemkomponente oder eine mit der ersten Systemkomponente verbindbare zweite Systemkomponente ist zur Beeinflussung der Beförderung des Poststücks in Abhängigkeit von dem Ergebnis des Lesevorgangs der Leseeinrichtung ausgebildet. Zusätzlich oder alternativ ist die erste Systemkomponente oder eine mit der ersten Systemkomponente verbindbare zweite Systemkomponente zum Erstellen einer Quittierungsinformation in Abhängigkeit von dem Ergebnis des Lesevorgangs der Leseeinrichtung ausgebildet. Hiermit lassen sich die oben im Zusammenhang mit dem erfindungsgemäßen Verfahren zur Beförderung von Poststücken beschriebenen Vorteile und Varianten in demselben Maße realisieren, sodass diesbezüglich auf die obigen Ausführungen Bezug genommen wird.

Bevorzugt ist die zweite Systemkomponente eine mit der ersten Systemkomponente über eine, insbesondere drahtlose, Kommunikationsverbindung verbindbare Datenzentrale. Bei vorteilhaften Varianten des erfindungsgemäßen Systems ist die erste Systemkomponente dann eine Lagereinrichtung für Poststücke, insbesondere ein Briefkasten.

Bei bevorzugten Varianten des erfindungsgemäßen Systems ist als eine dritte Systemkomponente eine erfindungsgemäße Datenverarbeitungseinrichtung, insbesondere eine erfindungsgemäße Frankiermaschine, vorgesehen.

Mit besonders vorteilhaften Varianten des erfindungsgemäßen Systems lässt sich in einfacher Weise eine so genannte Sendungsverfolgung realisieren, die häufig auch als Tracking and Tracing bezeichnet wird. Dabei ist erfindungsgemäß eine Mehrzahl vierter Systemkomponenten mit jeweils einer Leseeinrichtung zum Lesen einer ersten Information aus einer einem Poststück zugeordneten elektronischen ersten Speichereinrichtung vorgesehen. Eine mit den vierten Systemkomponenten verbindbare fünfte Systemkomponente ist dann zur Erstellung einer Beförderungsfortschrittsinformation für einzelne Poststücke aus den Ergebnissen der Lesevorgänge in den vierten Systemkomponenten ausgebildet. Die Beförderungsfortschrittsinformation beinhaltet dann beispielsweise jeweils einen Hinweis, dass das betreffende Poststück bei der betreffenden vierten Systemkomponente eingetroffen ist bzw. diese wieder verlassen hat. Bei der vierten Systemkomponente kann es sich beispielsweise ein Verteilzentrum, ein Transportmittel (z. B. ein Auslieferungsfahrzeug etc.) oder aber auch um den Empfängerbriefkasten oder dergleichen handeln.

Die vorliegende Erfindung betrifft weiterhin eine Systemkomponente für ein erfindungsgemäßes System zur Beförderung von Poststücken. Die Systemkomponente kann beispielsweise als Lagereinrichtung für Poststücke, insbesondere als Briefkasten, ausgebildet sein.

Die vorliegende Erfindung betrifft schließlich ein Poststück, insbesondere einen Brief. Erfindungsgemäß umfasst das Poststück eine elektronische erste Speichereinrichtung. Das erfindungsgemäße Poststück stellt die Grundlage für die Realisierung der oben beschriebenen Verfahren und Vorrichtungen dar. Mit ihm lassen sich die oben beschriebenen Vorteile und Varianten in demselben Maße realisieren, sodass diesbezüglich auf die obigen Ausführungen Bezug genommen wird.

Bei bevorzugten Varianten des erfindungsgemäßen Poststücks ist eine Außenhülle vorgesehen und die erste Speichereinrichtung mit der Außenhülle verbunden. Bei weiteren Varianten umfasst das Poststück neben der Außenhülle ein darin aufgenommenes Versandgut, wobei die erste Speichereinrichtung dann mit dem Versandgut verbunden ist. Als erste Speichereinrichtung finden wiederum die oben beschriebenen Speichereinrichtungen Anwendung. Insbesondere umfasst die erste Speichereinrichtung wiederum bevorzugt wenigstens eine RFID Speichereinheit. Auch hinsichtlich der in der ersten Speichereinrichtung gespeicherten Informationen wird hier wiederum auf die obigen Ausführungen verwiesen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen
- Figur 1A: eine schematische Darstellung eines ersten Teils einer bevorzugten Ausführungsform des erfindungsgemäßen Systems zur Beförderung von Poststücken, mit welchem eine bevorzugte Variante des erfindungsgemäßen Verfahrens zur Beförderung von Poststücken durchgeführt werden kann;
- Figur 1B: eine schematische Darstellung eines zweiten Teils des Systems aus Figur 1A;
- Figur 1C: eine schematische Darstellung eines dritten Teils des Systems aus Figur 1A;
- Figur 1 D: eine schematische Darstellung eines vierten Teils des Systems aus Figur 1 A;
- Figur 2A: eine schematische Darstellung eines ersten Teils einer bevorzugten Ausführungsform des erfindungsgemäßen Systems zur Beförderung von Poststücken, mit welchem eine bevorzugte Variante des erfindungsgemäßen Verfahrens zur Beförderung von Poststücken durchgeführt werden kann;
- Figur 2B: eine schematische Darstellung eines zweiten Teils des Systems aus Figur 2A;
- Figur 2C: eine schematische Darstellung eines dritten Teils des Systems aus Figur 2A;
- Figur 2D: eine schematische Darstellung eines vierten Teils des Systems aus Figur 2A.

### Erstes Ausführungsbeispiel

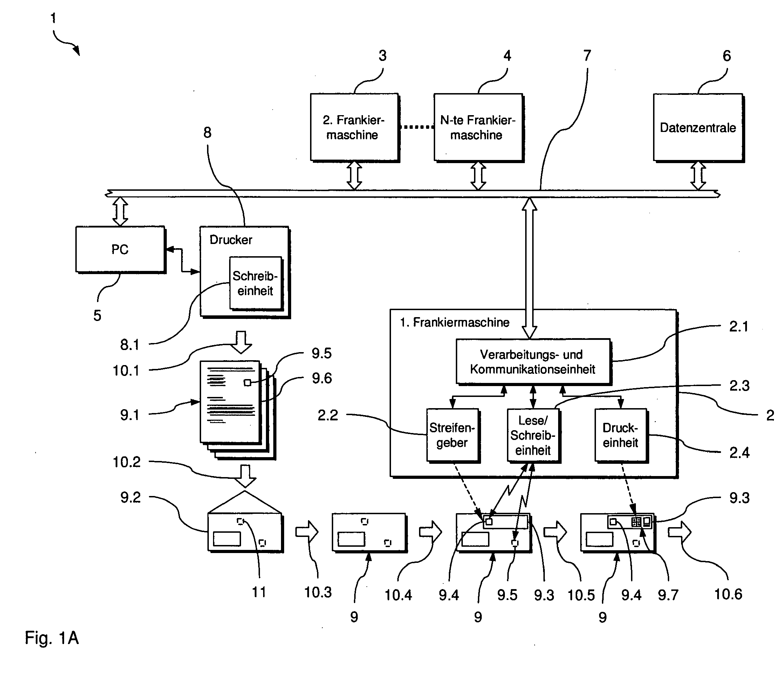

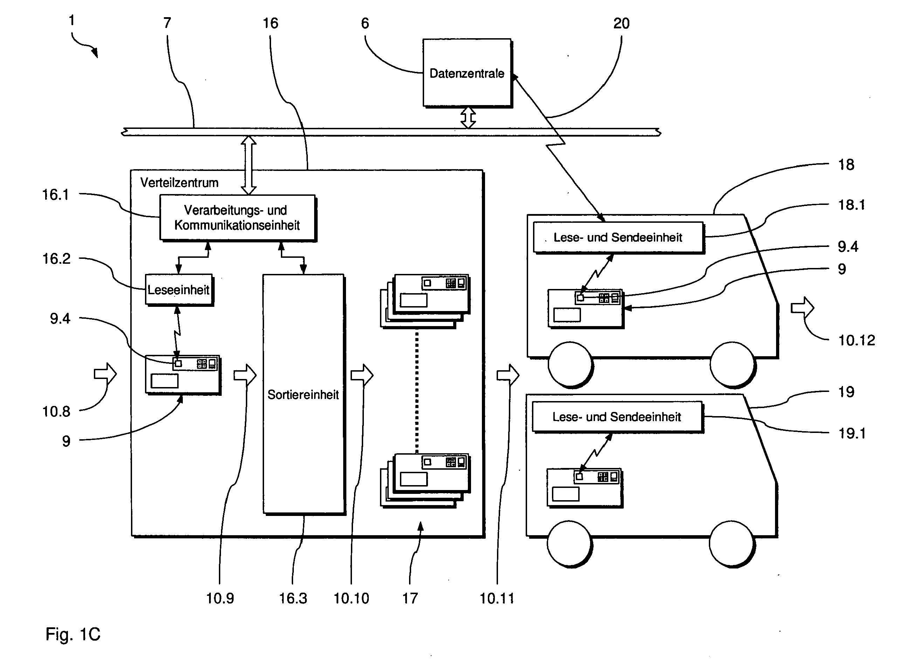

Im Folgenden wird unter Bezugnahme auf die Figuren 1A bis 1D eine bevorzugte Ausführungsform des erfindungsgemäßen Systems 1 zur Beförderung von Poststücken beschrieben, mit welchem eine bevorzugte Variante des erfindungsgemäßen Verfahrens zur Beförderung von Poststücken durchgeführt werden kann.

Die Figuren 1A bis 1 D zeigen schematische Darstellungen von einzelnen Teilen des Systems 1. In diesen Figuren sind Schritte, die einzelne Übergänge zwischen unterschiedlichen Zuständen bzw. Beförderungsstadien zu bearbeitender Poststücke bezeichnen, durch Blockpfeile symbolisiert.

Wie Figur 1A zu entnehmen ist, umfasst das System 1 unter anderem eine Reihe von N Frankiermaschinen 2, 3, 4, einen Personalcomputer (PC) 5 und eine Datenzentrale 6. Die Frankiermaschinen 2, 3, 4 und der PC 5 können jeweils über eine Telekommunikationsverbindung, beispielsweise ein Datennetz 7, mit der Datenzentrale 6 verbunden werden.

Mit Hilfe des PC 5 wird ein Poststück in Form eines Briefs 9 erstellt. Hierzu ist an den PC 5 ein Drucker 8 angeschlossen. Mit dem PC 5 wird als erste Komponente des Briefs 9 ein mehrseitiges Dokument 9.1 mit einem bestimmten Dokumenteninhalt generiert, beispielsweise ein anwaltlicher Schriftsatz. Das Dokument wird dann über den Drucker 8 in einem Schritt 10.1 ausgedruckt, in einem Schritt 10.2 gefaltet und in einen Briefumschlag 9.2 eingelegt. Der Briefumschlag 9.2 stellt dabei eine zweite Komponente des Briefs 9 dar.

Der Brief 9 wird in einem Schritt 10.3 verschlossen und in die Frankiermaschine 2 eingeführt. In einem Schritt 10.4 wird der Brief 9 in der Frankiermaschine 2 von einem mit der Verarbeitungs- und Kommunikationseinheit 2.1 verbundenen Streifengeber 2.2 in einem Zuordnungsschritt mit einem Frankierstreifen 9.3 versehen, der auf den Brief 9 aufgeklebt wird. Der Frankierstreifen 9.3 dient zum einen als Druckfläche für den späteren Frankierabdruck. Zum anderen ist mit dem Frankierstreifen 9.3 eine nach Art eines Transponders ausgebildete erste Speichereinrichtung in Form einer ersten RFID Einheit 9.4 verbunden.

In dem Schritt 10.4 wird die erste RFID Einheit 9.4 von einer mit der Verarbeitungs- und Kommunikationseinheit 2.1 verbundenen Schreib/Leseeinheit 2.3 der Frankiermaschine 2 in einem Speicherschritt über eine drahtlose Verbindung mit einer ersten Information beschrieben. Die Schreib/Leseeinheit 2.3 beschreibt die erste RFID Einheit 9.4 dabei nach einem Verfahren, welches für solche RFID Einheiten mit entsprechenden Sende- und Empfangskomponenten hinlänglich bekannt ist, sodass hierauf nicht näher eingegangen werden soll.

Der Brief 9 befindet sich während des Schreibvorgangs in die erste RFID Einheit 9.4 bereits im Briefkanal der Frankiermaschine 2, in dem er dann auch der Frankierabdruck generiert wird. Demgemäß befindet sich der Brief 9 und damit die auf ihn aufgebrachte erste RFID Einheit 9.4 hierbei dank des üblicherweise genau definierten Briefhandlings in der Frankiermaschine 2 in einer vergleichsweise sehr genau definierten räumlichen Beziehung zur Schreib/Leseeinheit 2.3, sodass sich der Schreibvorgang besonders einfach und zuverlässig gestaltet.

Die erste RFID Einheit 9.4 wird von der Schreib/Leseeinheit 2.3 mit einer ersten Information beschrieben, die wenigstens eine dem Brief 9 zugeordnete erste Teilinformation umfasst. Bei dieser dem Brief 9 zugeordneten ersten Teilinformation handelt es sich im Sinne der vorliegenden Erfindung um eine Information, welche sich auf bestimmte Merkmale des Briefs 9 bezieht bzw. diese wiedergibt. Bei diesen Merkmalen des Briefs 9 kann es sich um physische Merkmale wie Gewicht, Maße etc. handeln. Ebenso kann es sich aber auch um informationstechnische Merkmale, wie beispielsweise Absender, Empfänger, gewählten Postbeförderer, aber auch den physischen oder informationstechnischen Inhalt des Briefs 9 handeln. Mit dieser ersten Teilinformation ist es möglich, anhand von erfassbaren Merkmalen des Briefs 9 zu verifizieren, ob die in der ersten RFID Einheit 9.4 gespeicherte erste Information tatsächlich den vorgegebenen Bezug zum Brief 9 aufweist.

Bei der ersten Teilinformation kann es sich beispielsweise um alle oder Teile der Daten handeln, die üblicherweise in einem modernen Frankierabdruck enthalten sind, wie er beispielsweise von der Deutsche Post AG gemäß deren FRANKIT® Spezifikationen oder von dem United States Postal Service (USPS) gemäß dessen Information Based Indicium Program (IBIP) Spezifikationen vorgeschrieben wird. Ebenso kann es sich aber wie erwähnt um eine Information zum informationstechnischen Inhalt des Briefs 9 bis hin zum vollständigen informationstechnischen Inhalt des Briefs 9, also den Dokumenteninhalt, handeln.

Im vorliegenden Beispiel umfasst die erste Information als erste Teilinformationen eine auf wenigstens einen portorelevanten Parameter (Gewicht, Größe etc.) des Briefs 9 bezogene Information, eine auf einen Zusatzdienst bei der Beförderung des Briefs 9 bezogene Information (z. B. Einschreiben, Eilzustellung etc.), eine auf das für die Beförderung des Briefs 9 entrichtete oder zu entrichtende Porto bezogene Information (z. B. Portobetrag, Währung etc.), eine auf den Absender des Briefs 9 bezogene Information (z. B. Absender, Absenderadresse oder Teile davon, beispielsweise die Postleitzahl, etc.), eine auf den Empfänger des Briefs 9 bezogene Information (z. B. Empfänger, Empfängeradresse oder Teile davon, beispielsweise die Postleitzahl, etc.), eine auf den Beförderer des Briefs 9 bezogene Information (z. B. Beförderer, Einlieferungsstelle etc.) und eine auf den Inhalt des Briefs 9 bezogene Information. Hierbei kann es sich um eine auf den körperlichen Inhalt des Briefs 9 bezogene Information handeln (z. B. Anzahl der Blätter, Inhalt wie Schecks, Scheckkarten etc.). Ebenso kann es sich wie erwähnt um eine Information handeln, welche sich auf informationstechnischen Inhalt des Briefs 9 bezieht, beispielsweise bis hin zum gesamten Dokumenteninhalt.

Es sei an dieser Stelle angemerkt, dass die Frankiermaschine 2 den für die Beförderung des Briefs 9 erforderlichen Portowert in Abhängigkeit von dem Vorhandensein der ersten RFID Einheit 9.4 und dem Informationsgehalt der ersten Information berechnet. Dies rührt daher, dass der für die Beförderung des Briefs gewählte Beförderer gestaffelte Rabatte gewährt, je nachdem, wie weit eine automatisierte Sortierung durch das Vorhandensein der ersten RFID Einheit 9.4 und dem Informationsgehalt der ersten Information möglich ist. Der maximale Rabatt kann dabei beispielsweise erzielt werden, wenn die erste RFID Einheit 9.4 die vollständige Empfängeradresse enthält.

Die oben genannten ersten Teilinformationen individualisieren den Brief 9 zwar in der Regel hinlänglich, sodass er jederzeit anhand dieser Informationen genau bestimmbar ist. Es versteht sich jedoch, dass bei anderen Varianten der Erfindung auch vorgesehen sein kann, dass der jeweilige Brief eine einmalige und eindeutige Seriennummer erhält, anhand derer er eindeutig identifiziert werden kann. Diese einmalige und eindeutige Seriennummer wird dann ebenfalls als erste Teilinformation in der ersten RFID Einheit gespeichert.

Weiterhin umfasst die erste Information als weitere Teilinformation zudem eine die erste Teilinformation authentifizierende erste Authentifizierungsinformation SIG1. Diese kann auf beliebige geeignete Weise generiert worden sein. Beispielsweise kann es sich bei der Authentifizierungsinformation um einen hinlänglich bekannten so genannten Message Authentication Code (MAC) oder eine hinlänglich bekannte digitale Signatur über den ersten Teilinformationen handeln.

Die oben genannten ersten Teilinformationen können der Frankiermaschine 2 auf beliebige geeignete Weise übermittelt worden sein. So können insbesondere die ersten Teilinformationen, die sich auf portorelevante Parameter beziehen durch den Nutzer der Frankiermaschine 2 eingegeben worden sein oder automatisch von der Frankiermaschine 2 erfasst worden sein. Gleiches gilt auch für die übrigen ersten Teilinformationen.

Im vorliegenden Beispiel sind die auf den Absender des Briefs 9 bezogene Information, die auf den Empfänger des Briefs 9 bezogene Information und die auf den Inhalt des Briefs 9 bezogene Information von der Frankiermaschine 2 automatisch auf nachfolgend beschriebene Weise erfasst worden.

Beim Erstellen des Dokuments 9.1 generiert der PC 5 neben dem Dokumenteninhalt des Dokuments 9.1, der den Absender und den Empfänger umfasst, weiterhin in hinlänglich bekannter Weise eine zweite Authentifizierungsinformation SIG2 des Dokumenteninhalts. Bei dieser zweiten Authentifizierungsinformation SIG2 kann es sich beispielsweise um eine unter Verwendung eines einem geheimen Schlüssels generierte digitale Signatur oder einen MAC handeln, die bzw. der in hinlänglich bekannter Weise über dem gesamten Dokumenteninhalt oder vorbestimmten Teilen des Dokumenteninhalts generiert wird.

In dem Schritt 10.1 wird diese zweite Authentifizierungsinformation SIG2 zusammen mit der auf den Absender und den Empfänger des Briefs 9 bezogenen Information in einem Speicherschritt über eine drahtlose Verbindung von einer Schreibeinheit 8.1 des Druckers 8 gesteuert durch den PC 5 in eine zweite Speichereinrichtung in Form einer zweiten RFID Einheit 9.5 geschrieben, die mit dem Kopfbogen 9.6 des Dokuments 9.1 verbunden ist und somit ebenfalls dem Brief 9 in einem dem Speicherschritt vorangehenden Zuordnungsschritt zugeordnet wurde.

Bevor in dem Schritt 10.4 die erste RFID Einheit 9.4 von der Schreib/Leseeinheit 2.3 beschrieben wird, liest die Schreib/Leseeinheit 2.3 zunächst von der zweiten RFID Einheit 9.5 die darin gespeicherten Informationen, also unter anderem die zweite Authentifizierungsinformation SIG2 und die auf den Absender und den Empfänger des Briefs 9 bezogenen Informationen, über eine drahtlose Verbindung aus. Die Schreib/Leseeinheit 2.3 beschreibt die erste RFID Einheit 9.4 dann in der oben beschriebenen Weise unter Verwendung der aus der zweiten RFID Einheit 9.5 ausgelesenen Informationen als erste Teilinformationen.

In einem Schritt 10.5 bringt dann die mit der Verarbeitungs- und Kommunikationseinheit 2.1 verbundene Druckeinheit 2.4 der Frankiermaschine 2 einen herkömmlichen Frankierabdruck 9.7 auf den Frankierstreifen 9.3 und damit den Brief 9 auf. Der Frankierabdruck 9.7 enthält bzw. repräsentiert dabei eine zweite Information, die der in der ersten RFID Einheit 9.3 gespeicherten ersten Information entspricht. Hierdurch ist es möglich, anhand des Frankierabdrucks 9.7 die Authentizität und Integrität der in der ersten RFID Einheit 9.3 gespeicherten ersten Information nachzuvollziehen und umgekehrt.

Es versteht sich jedoch, dass bei anderen Varianten der Erfindung auch vorgesehen sein kann, dass sich die in dem Frankierabdruck abgedruckten Informationen und die in der ersten RFID Einheit gespeicherten Informationen nur zum Teil überdecken bzw. nur zum Teil in einer vorgegebenen Beziehung zueinander stehen. Dies kann insbesondere bei nur begrenzter Speicherkapazität der ersten RFID Einheit der Fall sein.

Es versteht sich daher weiterhin, dass bei anderen Varianten der Erfindung auch vorgesehen sein kann, dass nur ein Teil der oben genannten Informationen in der jeweiligen RFID Einheit gespeichert werden. Insbesondere kann vorgesehen sein, dass die jeweilige Authentifizierungsinformation trunkiert wird, um die Datenmenge zu verringern.

Die RFID Einheiten 9.4 und 9.5 können auf beliebige geeignete Weise mit dem Frankierstreifen 9.3 bzw. dem Kopfbogen 9.6 des Dokuments 9.1 verbunden sein. So können sie beispielsweise mit ihrem jeweiligen Träger verklebt oder in ihrem jeweiligen Träger eingebettet sein.

Weiterhin versteht es sich, dass die erste RFID Einheit 9.4 nicht notwendigerweise mit einem Frankierstreifen auf den Briefumschlag aufgebracht werden muss. Vielmehr kann sie auch schon mit dem Briefumschlag selbst in der beschriebenen Weise verbunden sein, wie dies in Figur 1A durch die Kontur 11 angedeutet ist.

Schließlich versteht es sich, dass bei anderen Varianten der Erfindung auch vorgesehen sein kann, dass die zweite RFID Einheit 9.5 fehlt. Die Frankiermaschine kann dann an Stelle der Schreib/Leseeinheit 2.3 gegebenenfalls eine einfache Schreibeinheit umfassen. Ebenso kann aber auch vorgesehen sein, dass die mit dem Briefumschlag verbundene erste RFID Einheit 9.4 fehlt und die Informationen von der Frankiermaschine 2 stattdessen in die zweite RFID Einheit 9.5 auf dem Kopfbogen 9.6 geschrieben werden.

In einem Schritt 10.6 wird der Brief 9 dann in eine erste Lagereinrichtung in Form eines ersten Briefkastens 12 eingeworfen. Der Briefkasten 12 weist als eine Systemkomponente des Systems 1 eine erste Lese- und Sendeeinheit 12.1 auf, die in einem Leseschritt des Schritts 10.6 über eine drahtlose Verbindung den Inhalt der ersten RFID Einheit 9.4 liest.

Die erste Lese- und Sendeeinheit 12.1 erstellt aus dem gelesenen Inhalt der ersten RFID Einheit 9.4 in einem ersten Quittierungsschritt zunächst eine erste Quittungsinformation Q1. Mit dieser ersten Quittungsinformation Q1 wird der Eingang des Briefs 9 in dem ersten Briefkasten 12 quittiert und dokumentiert. Dabei umfasst die erste Quittungsinformation Q1 bevorzugt eine individuelle Kennzeichnung des Briefs 9, beispielsweise seine einmalige und eindeutige Seriennummer, den Zeitpunkt des Eingangs, eine individuelle Kennzeichnung des ersten Briefkastens 12, z. B. dessen einmalige und eindeutige Seriennummer, und eine Authentifizierungsinformation über dem Inhalt der ersten Quittungsinformation Q1, beispielsweise eine digitale Signatur oder einen MAC des Briefkastens 12.

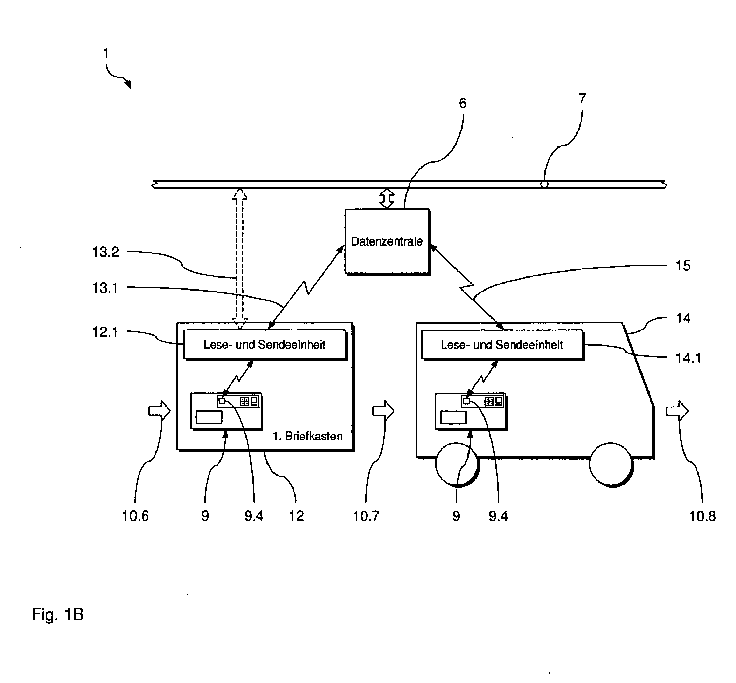

Die so authentifizierte erste Quittungsinformation Q1 wird dann von der ersten Lese- und Sendeeinheit 12.1 über eine zumindest abschnittsweise drahtlose Verbindung 13.1 an die Datenzentrale 6 übermittelt. Alternativ kann eine drahtgebundene Verbindung über das Datennetz 7 vorgesehen sein, wie in Figur 1 B durch die gestrichelte Kontur 13.2 angedeutet ist.

Die Datenzentrale 6 protokolliert den Eingang der ersten Quittungsinformation Q1 und stellt die - gegebenenfalls nochmals durch die Datenzentrale 6 authentifizierte - erste Quittungsinformation Q1 zum Abruf über das Datennetz 7 bereit. Der PC 5 und/oder die Frankiermaschine 2 können die erste Quittungsinformation Q1 dann - gegebenenfalls nach Durchführung einer Überprüfung ihrer Zugangsberechtigung - über das Datennetz 7 von der Datenzentrale 6 abrufen. Hiermit ist dank der mit dem Brief 9 verknüpften ersten RFID Einheit 9.4 in einfacher Weise eine zuverlässige und sichere automatisierte Sendungsverfolgung möglich.

Der aus der ersten RFID Einheit 9.4 durch die erste Lese- und Sendeeinheit 12.1 gelesene Inhalt wird weiterhin dazu benutzt, die Leerung des ersten Briefkastens 12 in nachfolgend erläuterter Weise zu steuern. So registriert die Datenzentrale 6 anhand der an von der ersten Lese- und Sendeeinheit 12.1 übermittelten Daten, wie viele Briefe sich derzeit im ersten Briefkasten 12 befinden. Ist ein bestimmtes Leerungskriterium erfüllt, veranlasst die Datenzentrale 6 als weitere Systemkomponente des Systems 1 die Leerung des ersten Briefkastens 12 in einem Schritt 10.7. Mit anderen Worten erfolgt dann die Weiterbeförderung des Briefs in einem Beförderungsschritt des Schritts 10.7 in Abhängigkeit von dem Leseschritt

Das Leerungskriterium kann beliebig festgelegt werden. So kann beispielsweise eine bestimmte Anzahl von Briefen vorgegeben werden, bei deren Erreichen die Leerung ausgelöst wird. Bei der Entscheidung, wann die geleert Leerung ausgelöst wird, kann die Datenzentrale 6 aber gegebenenfalls auch die aus der ersten RFID Einheit 9.4 gelesenen Portowerte der Briefe verwenden. Anhand dieser Portowerte kann zum Beispiel der Füllgrad des Briefkastens 12 abgeschätzt werden, da in der Regel der Portowert von der Größe des Briefs abhängt. Ebenso können zusätzlich oder alternativ aus der ersten RFID Einheit 9.4 gelesene Informationen über eventuelle gewählte Zusatzleistungen bei der Briefbeförderung, wie z. B. Eilzustellung etc., berücksichtigt werden. So kann zum einen der Portowert hiervon abhängen, sodass eine genauere Abschätzung des Füllgrads des Briefkastens 12 vorgenommen werden kann.

Ebenso kann als ein zeitliches Leerungskriterium eine bestimmte Zeitspanne festgelegt sein, welche der am längsten in dem Briefkasten 12 befindliche Brief in dem Briefkasten 12 liegen darf, ohne dass eine Leerung erfolgt. Auch hier können wieder aus der ersten RFID Einheit 9.4 gelesene Informationen über eventuelle gewählte Zusatzleistungen bei der Briefbeförderung, wie z. B. Eilzustellung etc., berücksichtigt werden. So kann vorgesehen sein, dass sich das zu berücksichtigende zeitliche Leerungskriterium in Abhängigkeit von der Art der im Briefkasten 12 befindlichen Briefe ändert. Beispielsweise kann ein in den Briefkasten 12 neu eingeworfener Brief mit Eilzustellung bewirken, dass sich die Zeitspanne bis zur Auslösung der nächsten Leerung des Briefkastens 12 deutlich verkürzt.

Es versteht sich jedoch, dass bei anderen Varianten der Erfindung auch vorgesehen sein kann, dass die Auslösung der Leerung des Briefkastens nicht durch die Datenzentrale sondern durch den Briefkasten erfolgt. Dieser kann die Leerungskriterien in der oben beschriebenen Weise überwachen und die Leerung durch ein entsprechendes Signal, beispielsweise and die Datenzentrale, auslösen.

Dank der mit dem Brief 9 verknüpften ersten RFID Einheit 9.4 ist die vorbeschriebene automatisierte Überwachung von einem oder mehreren Leerungskriterien möglich, die in vorteilhafter Weise eine bedarfsgerechte Leerung von Briefkästen oder anderen Lagereinrichtungen für Poststücke ermöglicht. So ist hiermit eine zeitnahe, optimierte Planung der Fahrtrouten von Leerungsfahrzeugen etc. möglich. Dies kann insbesondere in ländlichen Gegenden mit unregelmäßiger Nutzung des Briefkastens 12 von Vorteil sein.

In dem Schritt 10.7 wird der Brief 9 dann dem ersten Briefkasten 12 entnommen und in ein erstes Transportfahrzeug 14 zur Weiterbeforderung übergeben. Das erste Transportfahrzeug 14 weist eine zweite Lese- und Sendeeinheit 14.1 auf, die in einem Leseschritt des Schritts 10.7 über eine drahtlose Verbindung den Inhalt der ersten RFID Einheit 9.4 liest.

Die zweite Lese- und Sendeeinheit 12.1 erstellt aus dem gelesenen Inhalt der ersten RFID Einheit 9.4 in einem zweiten Quittierungsschritt zunächst eine zweite Quittungsinformation Q2. Mit dieser zweiten Quittungsinformation Q1 wird der Eingang des Briefs 9 in dem ersten Transportfahrzeug 14 quittiert und dokumentiert. Dabei umfasst die zweite Quittungsinformation Q1 bevorzugt eine individuelle Kennzeichnung des Briefs 9, beispielsweise seine einmalige und eindeutige Seriennummer, den Zeitpunkt des Eingangs, eine individuelle Kennzeichnung des ersten Transportfahrzeugs 14, z. B. dessen einmalige und eindeutige Seriennummer, und eine Authentifizierungsinformation über dem Inhalt der zweiten Quittungsinformation Q2, beispielsweise eine digitale Signatur oder einen MAC des ersten Transportfahrzeugs 14.

Die so authentifizierte zweite Quittungsinformation Q2 wird dann von der zweiten Lese- und Sendeeinheit 14.1 über eine zumindest abschnittsweise drahtlose Verbindung 15 an die Datenzentrale 6 übermittelt. Die Datenzentrale 6 protokolliert den Eingang der zweiten Quittungsinformation Q2 und stellt die - gegebenenfalls nochmals durch die Datenzentrale 6 authentifizierte - zweite Quittungsinformation Q2 zum Abruf über das Datennetz 7 bereit. Der PC 5 und/oder die Frankiermaschine 2 können auch die zweite Quittungsinformation Q2 dann - gegebenenfalls nach Durchführung einer Überprüfung ihrer Zugangsberechtigung - über das Datennetz 7 von der Datenzentrale 6 abrufen. Hiermit ist dank der mit dem Brief 9 verknüpften ersten RFID Einheit 9.4 in einfacher Weise ein weiterer Schritt der automatisierten Sendungsverfolgung möglich.

Es versteht sich hierbei, dass bei anderen Varianten der Erfindung auch vorgesehen sein kann, dass der erste Briefkasten zusätzlich zu der zweiten Quittungsinformation Q2 noch ähnlich der ersten Quittungsinformation Q1 eine weitere Quittungsinformation Q1' erzeugt, welche quittiert und protokolliert, dass der Brief den ersten Briefkasten verlassen hat.

In einem Schritt 10.8 wird der Brief 9 dann durch das Transportfahrzeug 14 in ein eine weitere Systemkomponente des Systems 1 darstellendes Briefverteilzentrum 16 zur Weiterbeforderung eingeliefert. Das Briefverteilzentrum 16 weist eine Verarbeitungs- und Kommunikationseinheit 16.1 und eine damit verbundene Leseneinheit 16.2 auf. In einem Leseschritt des Schritts 10.8 liest die Leseneinheit 16.2 über eine drahtlose Verbindung den Inhalt der ersten RFID Einheit 9.4.

Die Leseneinheit 16.2 oder die Verarbeitungs- und Kommunikationseinheit 16.1 erstellt aus dem gelesenen Inhalt der ersten RFID Einheit 9.4 in einem dritten Quittierungsschritt zunächst eine dritte Quittungsinformation Q3. Mit dieser dritten Quittungsinformation Q3 wird der Eingang des Briefs 9 in dem Briefverteilzentrum 16 quittiert und dokumentiert. Dabei umfasst die dritte Quittungsinformation Q3 bevorzugt eine individuelle Kennzeichnung des Briefs 9, beispielsweise seine einmalige und eindeutige Seriennummer, den Zeitpunkt des Eingangs im Briefverteilzentrum 16, eine individuelle Kennzeichnung des Briefverteilzentrums 16, z. B. dessen einmalige und eindeutige Seriennummer, und eine Authentifizierungsinformation über dem Inhalt der dritten Quittungsinformation Q3, beispielsweise eine digitale Signatur oder einen MAC des Briefverteilzentrums 16.

Die so authentifizierte dritte Quittungsinformation Q3 wird dann über das Datennetz 7 von der Verarbeitungs- und Kommunikationseinheit 16.1 an die Datenzentrale 6 übermittelt. Die Datenzentrale 6 protokolliert den Eingang der dritten Quittungsinformation Q3 und stellt die - gegebenenfalls nochmals durch die Datenzentrale 6 authentifizierte - dritte Quittungsinformation Q3 zum Abruf über das Datennetz 7 bereit. Der PC 5 und/oder die Frankiermaschine 2 können auch die dritte Quittungsinformation Q3 dann - gegebenenfalls nach Durchführung einer Überprüfung ihrer Zugangsberechtigung - über das Datennetz 7 von der Datenzentrale 6 abrufen. Hiermit ist dank der mit dem Brief 9 verknüpften ersten RFID Einheit 9.4 in einfacher Weise ein weiterer Schritt der automatisierten Sendungsverfolgung möglich.

Es versteht sich hierbei wiederum, dass bei anderen Varianten der Erfindung auch vorgesehen sein kann, dass das erste Transportfahrzeug zusätzlich zu der dritten Quittungsinformation Q3 noch ähnlich der zweiten Quittungsinformation Q2 eine weitere Quittungsinformation Q2' erzeugt, welche quittiert und protokolliert, dass der Brief das erste Transportfahrzeug verlassen hat.

In einem Schritt 10.9 wird der Brief 9 dann an eine Sortiereinheit 16.3 des Briefverteilzentrums 16 übergeben, in welcher er einen Sortiervorgang durchläuft. Dabei werden die Briefe 9 in Abhängigkeit von dem Ergebnis des vorangehenden Leseschritts durch die Leseneinheit 16.2, also dem aus der jeweiligen ersten RFID Einheit 9.4 gelesenen Inhalt, sortiert.

Die Sortierung durch die Sortiereinheit 16.3 findet im vorliegenden Beispiel unter anderem in Abhängigkeit von der in der ersten RFID Einheit 9.4 gespeicherten auf den Empfänger des Briefs 9 bezogenen Information und der auf den Beförderer des Briefs 9 bezogenen Information statt. Mit anderen Worten findet auch in diesem durch die Sortierung gebildeten Beförderungsschritt - dank der mit dem Brief 9 verknüpften ersten RFID Einheit 9.4 - eine einfache automatisierte die Beförderung des Briefs 9 in Abhängigkeit von dem vorangehenden Leseschritt statt.

Es versteht sich hierbei, dass bei anderen Varianten der Erfindung auch vorgesehen sein kann, dass nach anderen und/oder weiteren Kriterien sortiert wird. Insbesondere kann zusätzlich auch noch in Abhängigkeit von der in der ersten RFID Einheit 9.4 gespeicherten, auf gewählte Zusatzleistungen (Eilzustellung etc.) bezogenen Information sortiert werden.

In einen Schritt 10.10 erzeugt die Sortiereinheit 16.3 sortierte Briefstapel 17 für unterschiedliche Postbeförderer, die in einem Schritt 10.11 dann an zweite Transportfahrzeuge 18, 19 der unterschiedlichen Postbeförderer übergeben werden. Das jeweilige zweite Transportfahrzeug 18, 19 weist eine dritte Lese- und Sendeeinheit 18.1 bzw. 19.1 auf, die in einem Leseschritt des Schritts 10.11 über eine drahtlose Verbindung den Inhalt der ersten RFID Einheit 9.4 liest.

Die dritte Lese- und Sendeeinheit 18.1 erstellt aus dem gelesenen Inhalt der ersten RFID Einheit 9.4 in einem vierten Quittierungsschritt zunächst eine vierte Quittungsinformation Q4. Mit dieser vierten Quittungsinformation Q4 wird der Eingang des Briefs 9 in dem zweiten Transportfahrzeug 18 quittiert und dokumentiert. Dabei umfasst die vierte Quittungsinformation Q4 bevorzugt eine individuelle Kennzeichnung des Briefs 9, beispielsweise seine einmalige und eindeutige Seriennummer, den Zeitpunkt des Eingangs im Transportfahrzeug 18, eine individuelle Kennzeichnung des zweiten Transportfahrzeugs 18, z. B. dessen einmalige und eindeutige Seriennummer, und eine Authentifizierungsinformation über dem Inhalt der vierten Quittungsinformation Q4, beispielsweise eine digitale Signatur oder einen MAC des zweiten Transportfahrzeugs 18.

Die so authentifizierte vierte Quittungsinformation Q4 wird dann von der dritten Lese- und Sendeeinheit 18.1 über eine zumindest abschnittsweise drahtlose Verbindung 20 an die Datenzentrale 6 übermittelt. Die Datenzentrale 6 protokolliert den Eingang der vierten Quittungsinformation Q4 und stellt die - gegebenenfalls nochmals durch die Datenzentrale 6 authentifizierte - vierte Quittungsinformation Q4 zum Abruf über das Datennetz 7 bereit. Der PC 5 und/oder die Frankiermaschine 2 können auch die vierte Quittungsinformation Q4 dann - gegebenenfalls nach Durchführung einer Überprüfung ihrer Zugangsberechtigung - über das Datennetz 7 von der Datenzentrale 6 abrufen. Hiermit ist dank der mit dem Brief 9 verknüpften ersten RFID Einheit 9.4 in einfacher Weise ein weiterer Schritt der automatisierten Sendungsverfolgung möglich.

Es versteht sich hierbei, dass bei anderen Varianten der Erfindung wiederum vorgesehen sein kann, dass das Sortierzentrum zusätzlich zu der vierten Quittungsinformation Q4 noch ähnlich der dritten Quittungsinformation Q3 eine weitere Quittungsinformation Q3' erzeugt, welche quittiert und protokolliert, dass der Brief das Sortierzentrum verlassen hat.

In einem Schritt 10.12 wird der Brief 9 dann in eine zweite Lagereinrichtung in Form eines zweiten Briefkastens 21 des Empfängers des Briefs 9 eingeworfen. Im vorliegenden Fall handelt es sich dabei um den Briefkasten der Behörde, an die der anwaltliche Schriftsatz 9.1 gerichtet ist. Der Briefkasten 21 weist eine vierte Lese- und Sendeeinheit 21.1 auf, die in einem Leseschritt des Schritts 10.12 über eine drahtlose Verbindung den Inhalt der ersten RFID Einheit 9.4 und der zweiten RFID Einheit 9.5 liest.

Die vierte Lese- und Sendeeinheit 21.1 erstellt aus dem gelesenen Inhalt der ersten RFID Einheit 9.4 und der zweiten RFID Einheit 9.5 in einem fünften Quittierungsschritt eine fünfte Quittungsinformation Q5. Mit dieser fünften Quittungsinformation Q5 wird der Eingang des Briefs 9 in dem zweiten Briefkasten 21 quittiert und dokumentiert. Dabei umfasst die fünfte Quittungsinformation Q5 bevorzugt eine individuelle Kennzeichnung des Briefs 9, beispielsweise seine einmalige und eindeutige Seriennummer, den Zeitpunkt des Eingangs im zweiten Briefkasten 21, eine individuelle Kennzeichnung des zweiten Briefkastens 21, z. B. dessen einmalige und eindeutige Seriennummer, die über dem Dokumenteninhalt erstellte zweite Authentifizierungsinformation SIG2 und eine Authentifizierungsinformation über dem Inhalt der fünften Quittungsinformation Q5, beispielsweise eine digitale Signatur oder einen MAC des zweiten Briefkastens 21. Um eine gerichtlich verwertbare fünfte Quittungsinformation Q5 zu generieren, weist der zweiten Briefkasten 21 ein entsprechend sicheres Zeitstempelmodul 21.1, welches in hinlänglich bekannter Weise als Beleg für den Zeitpunkt des Eingangs des Briefs 9 einen entsprechend manipulationssicheren Zeitstempel generiert, der in die fünfte Quittungsinformation Q5 einbezogen wird.

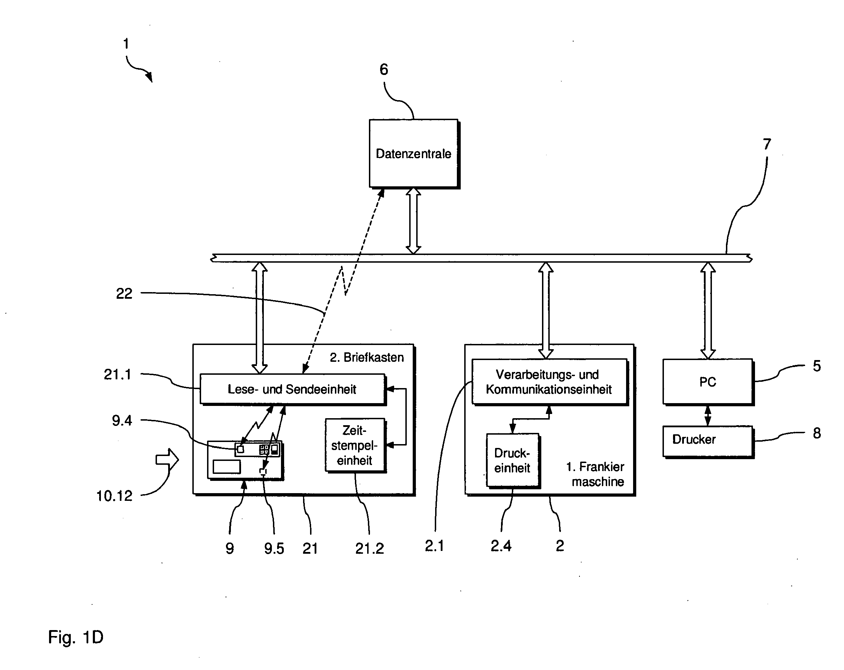

Die so authentifizierte fünfte Quittungsinformation Q5 wird dann von der vierten Lese- und Sendeeinheit 21.1 über eine das Datennetz 7 an die Datenzentrale 6 übermittelt. Alternativ kann eine zumindest abschnittsweise drahtlose Verbindung vorgesehen sein, wie in Figur 1 D durch die gestrichelte Kontur 22 angedeutet ist.

Die Datenzentrale 6 protokolliert den Eingang der fünften Quittungsinformation Q5 und stellt die - gegebenenfalls nochmals durch die Datenzentrale 6 authentifizierte - fünfte Quittungsinformation Q5 zum Abruf über das Datennetz 7 bereit. Der PC 5 und/oder die Frankiermaschine 2 können die fünfte Quittungsinformation Q5 dann - gegebenenfalls nach Durchführung einer Überprüfung ihrer Zugangsberechtigung - über das Datennetz 7 von der Datenzentrale 6 abrufen. Alternativ kann auch vorgesehen sein, dass die Daten-zentrale 6 die fünfte Quittungsinformation Q5 nach ihrer Erstellung über das Datennetz 7 aktiv an den PC 5 und/oder die Frankiermaschine 2 übermittelt. Hiermit ist dank der mit dem Brief 9 verknüpften ersten RFID Einheit 9.4 in einfacher Weise ein weiterer automatisierter Schritt der Sendungsverfolgung möglich. Ebenso wird dank der mit dem Brief 9 verknüpften ersten RFID Einheit 9.4 in einfacher Weise mit der fünften Quittungsinformation Q5 automatisch eine gerichtlich verwertbare Eingangsbestätigung des Schriftsatzes 9.1 bei seinem Adressaten generiert.

Die über das Datennetz 7 aktiv an den PC 5 und/oder die Frankiermaschine 2 übermittelte fünfte Quittungsinformation Q5 kann dann über die Druckeinheit 2.5 der Frankiermaschine 2 oder den an den PC 5 angeschlossenen Drucker 8 - automatisch oder nach Bedarf - für die Akten des Absenders des Briefs 9 ausgedruckt werden.

### Zweites Ausführungsbeispiel

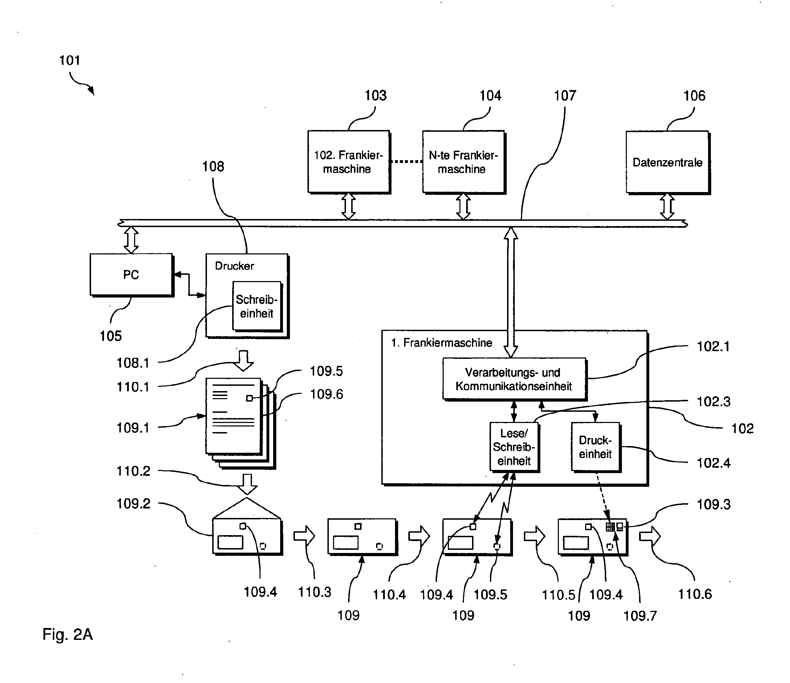

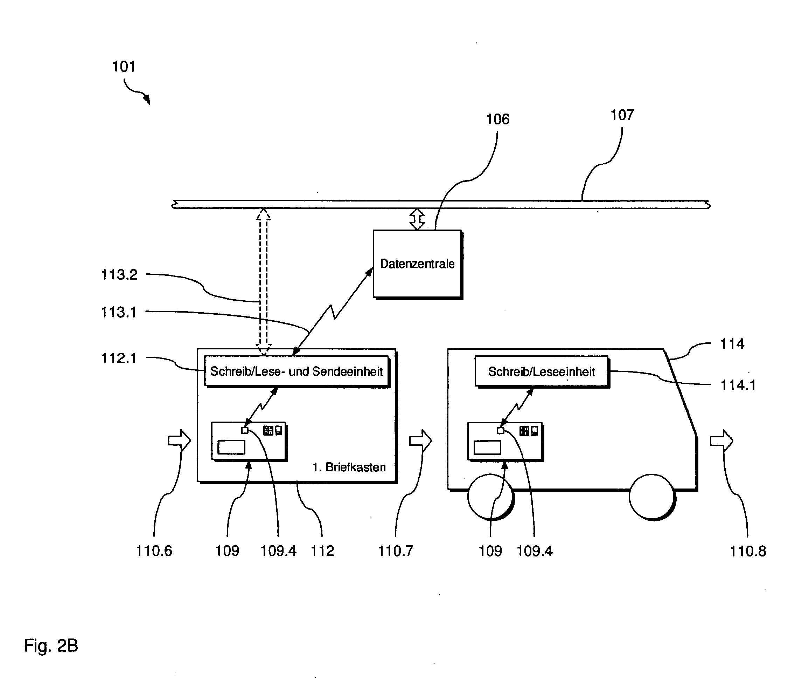

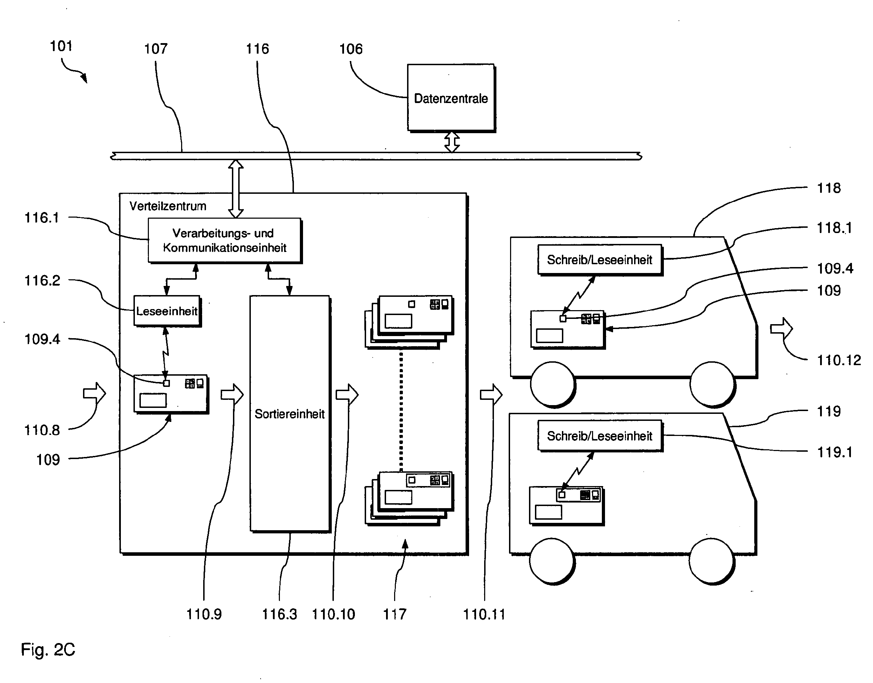

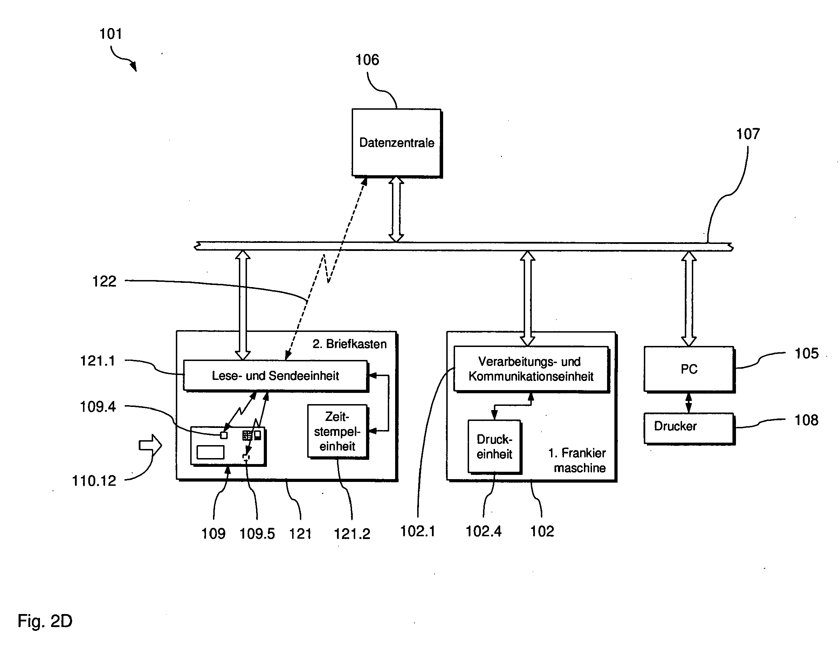

Im Folgenden wird unter Bezugnahme auf die Figuren 2A bis 2D eine weitere bevorzugte Ausführungsform des erfindungsgemäßen Systems 101 zur Beförderung von Poststücken beschrieben, mit welchem eine bevorzugte Variante des erfindungsgemäßen Verfahrens zur Beförderung von Poststücken durchgeführt werden kann. Das System entspricht in Funktionsweise und Aufbau grundsätzlich dem System 101 aus den Figuren 101 A bis 101 D, sodass hier hauptsächlich auf die Unterschiede eingegangen wird.

Die Figuren 2A bis 2D zeigen schematische Darstellungen von einzelnen Teilen des Systems 101. In diesen Figuren sind Schritte, die einzelne Übergänge zwischen unterschiedlichen Zuständen bzw. Beförderungsstadien zu bearbeitender Poststücke bezeichnen, durch Blockpfeile symbolisiert.

Wie Figur 2A zu entnehmen ist, umfasst das System 101 unter anderem eine Reihe von N Frankiermaschinen 102, 103, 104, einen Personalcomputer (PC) 105 und eine Datenzentrale 106. Die Frankiermaschinen 102, 103, 104 und der PC 105 können jeweils über eine Telekommunikationsverbindung, beispielsweise ein Datennetz 107, mit der Datenzentrale 106 verbunden werden.

Mit Hilfe des PC 105 wird ein Poststück in Form eines Briefs 109 erstellt. Hierzu ist an den PC 105 ein Drucker 108 angeschlossen. Mit dem PC 105 wird als erste Komponente des Briefs 109 ein mehrseitiges Dokument 109.1 mit einem bestimmten Dokumenteninhalt generiert, beispielsweise ein anwaltlicher Schriftsatz. Das Dokument wird dann über den Drucker 108 in einem Schritt 110.1 ausgedruckt, in einem Schritt 110.2 gefaltet und in einen Briefumschlag 109.2 eingelegt. Der Briefumschlag 109.2 stellt dabei eine zweite Komponente des Briefs 109 dar. In einem vorangehenden Zuordnungsschritt wurde mit dem Briefumschlag eine nach Art eines Transponders ausgebildete erste Speichereinrichtung in Form einer ersten RFID Einheit 109.4 verbunden. Dies kann beispielsweise schon durch den Hersteller oder einen Lieferanten des Briefumschlags 109.2 erfolgt sein.

Der Brief 109 wird in einem Schritt 110.3 verschlossen und in die Frankiermaschine 102 eingeführt. In einem Schritt 110.4 wird die erste RFID Einheit 109.4 von einer mit der Verarbeitungs- und Kommunikationseinheit 102.1 verbundenen Schreib/Leseeinheit 102.3 der Frankiermaschine 102 in einem Speicherschritt über eine drahtlose Verbindung mit einer ersten Information beschrieben. Die Schreib/Leseeinheit 102.3 beschreibt die erste RFID Einheit 109.4 dabei nach einem Verfahren, welches für solche RFID Einheiten mit entsprechenden Sende- und Empfangskomponenten hinlänglich bekannt ist, sodass hierauf nicht näher eingegangen werden soll.

Der Brief 109 befindet sich während des Schreibvorgangs in die erste RFID Einheit 109.4 bereits im Briefkanal der Frankiermaschine 102, in dem er dann auch der Frankierabdruck generiert wird. Demgemäß befindet sich der Brief 109 und damit die auf ihn aufgebrachte erste RFID Einheit 109.4 hierbei dank des üblicherweise genau definierten Briefhandlings in der Frankiermaschine 102 in einer vergleichsweise sehr genau definierten räumlichen Beziehung zur Schreib/Leseeinheit 102.3, sodass sich der Schreibvorgang besonders einfach und zuverlässig gestaltet.

Die erste RFID Einheit 109.4 wird von der Schreib/Leseeinheit 102.3 mit einer ersten Information beschrieben, wie dies oben im Zusammenhang mit dem Beschreiben der ersten RFID Einheit 9.4 durch die Schreib/Leseeinheit 2.3 beschrieben wurde, sodass diesbezüglich, insbesondere im Hinblick auf den Informationsgehalt der ersten Information, auf die obigen Ausführungen verwiesen wird.

Wie beim ersten Ausführungsbeispiel sind die auf den Absender des Briefs 109 bezogene Information, die auf den Empfänger des Briefs 109 bezogene Information und die auf den Inhalt des Briefs 109 bezogene Information von der Frankiermaschine 102 automatisch erfasst worden, sodass diesbezüglich auf die obigen Ausführungen verwiesen wird.

In einem Schritt 110.5 bringt dann die mit der Verarbeitungs- und Kommunikationseinheit 102.1 verbundene Druckeinheit 102.4 der Frankiermaschine 102 einen herkömmlichen Frankierabdruck 109.7 auf den Briefumschlag 109.2 und damit den Brief 109 auf. Der Frankierabdruck 109.7 enthält bzw. repräsentiert dabei eine zweite Information, die der in der ersten RFID Einheit 109.3 gespeicherten ersten Information entspricht oder, wie oben im Zusammenhang mit dem ersten Ausführungsbeispiel beschrieben, in einer anderen vorgegebenen Beziehung hierzu steht. Hierdurch ist es möglich, anhand des Frankierabdrucks 109.7 die Authentizität und Integrität der in der ersten RFID Einheit 109.3 gespeicherten ersten Information nachzuvollziehen und umgekehrt.

Es versteht sich wiederum, dass bei anderen Varianten der Erfindung auch vorgesehen sein kann, dass nur ein Teil der oben genannten Informationen in der jeweiligen RFID Einheit gespeichert werden. Insbesondere kann vorgesehen sein, dass die jeweilige Authentifizierungsinformation trunkiert wird, um die Datenmenge zu verringern.

Schließlich versteht es sich wiederum, dass bei anderen Varianten der Erfindung auch vorgesehen sein kann, dass die zweite RFID Einheit 109.5 fehlt. Die Frankiermaschine kann dann an Stelle der Schreib/Leseeinheit 102.3 gegebenenfalls eine einfache Schreibeinheit umfassen. Ebenso kann aber auch vorgesehen sein, dass die mit dem Briefumschlag verbundene erste RFID Einheit 109.4 fehlt und die Informationen von der Frankiermaschine 102 stattdessen in die zweite RFID Einheit 109.5 auf dem Kopfbogen 109.6 geschrieben werden.

In einem Schritt 110.6 wird der Brief 109 dann in eine erste Lagereinrichtung in Form eines ersten Briefkastens 112 eingeworfen. Der Briefkasten 112 stellt eine erste Beförderungsstation im Sinne der vorliegenden Erfindung dar. Der Briefkasten 112 weist als eine Systemkomponente des Systems 101 eine erste Schreib/Lese- und Sendeeinheit 112.1 auf, die in einem Leseschritt des Schritts 110.6 über eine drahtlose Verbindung den Inhalt der ersten RFID Einheit 109.4 liest.

Die erste Schreib/Lese- und Sendeeinheit 112.1 erstellt aus dem gelesenen Inhalt der ersten RFID Einheit 109.4 in einem ersten Quittierungsschritt zunächst eine erste Quittungsinformation Q1. Mit dieser ersten Quittungsinformation Q1 wird der Eingang des Briefs 109 in dem ersten Briefkasten 112 quittiert und dokumentiert. Dabei umfasst die erste Quittungsinformation Q1 bevorzugt eine individuelle Kennzeichnung des Briefs 109, beispielsweise seine einmalige und eindeutige Seriennummer, den Zeitpunkt des Eingangs, eine individuelle Kennzeichnung des ersten Briefkastens 112, z. B. dessen einmalige und eindeutige Seriennummer, über die auch der Betreiber des Briefkastens identifizierbar ist, und eine Authentifizierungsinformation über dem Inhalt der ersten Quittungsinformation Q1, beispielsweise eine digitale Signatur oder einen MAC des Briefkastens 112.

Die so authentifizierte erste Quittungsinformation Q1 wird dann von der ersten Schreib/Lese- und Sendeeinheit 112.1 über eine zumindest abschnittsweise drahtlose Verbindung 113.1 an die Datenzentrale 106 übermittelt. Alternativ kann eine drahtgebundene Verbindung über das Datennetz 107 vorgesehen sein, wie in Figur 101 B durch die gestrichelte Kontur 113.2 angedeutet ist.

Die Datenzentrale 106 protokolliert den Eingang der ersten Quittungsinformation Q1 und stellt die - gegebenenfalls nochmals durch die Datenzentrale 106 authentifizierte - erste Quittungsinformation Q1 zum Abruf über das Datennetz 107 bereit. Der PC 105 und/oder die Frankiermaschine 102 können die erste Quittungsinformation Q1 dann - gegebenenfalls nach Durchführung einer Überprüfung ihrer Zugangsberechtigung - über das Datennetz 107 von der Datenzentrale 106 abrufen. Hiermit ist dank der mit dem Brief 109 verknüpften ersten RFID Einheit 109.4 in einfacher Weise eine zuverlässige und sichere automatisierte Sendungsverfolgung möglich.

Um beispielsweise bei Ausfall der Verbindung zur Datenzentrale 106 auch eine zuverlässige und sichere automatisierte Offline Sendungsverfolgung zu ermöglichen, schreibt die erste Schreib/Lese- und Sendeeinheit 112.1 in einem Speicherschritt des Schritts 110.6 über eine drahtlose Verbindung die erste Quittungsinformation Q1 als erste Beförderungsstationsinformation in die erste RFID Einheit 109.4. Die erste Schreib/Lese- und Sendeeinheit 112.1 stellt somit eine erfindungsgemäße Datenverarbeitungseinrichtung dar, mit der bestimmte Daten in die erste RFID Einheit 109.4 geschrieben werden können. Die erste Quittungsinformation Q1 kann später als erste Beförderungsstationsinformation aus der ersten RFID Einheit 109.4 ausgelesen werden, um die Beförderungshistorie des Briefs 109 zu rekonstruieren.

Der aus der ersten RFID Einheit 109.4 durch die erste Schreib/Lese- und Sendeeinheit 112.1 gelesene Inhalt wird weiterhin dazu benutzt, die Leerung des ersten Briefkastens 112 zu steuern, wie dies bereits oben im Zusammenhang mit dem ersten Ausführungsbeispiel beschrieben wurde, sodass diesbezüglich auf die obigen Ausführungen verwiesen wird.

In dem Schritt 110.7 wird der Brief 109 dann dem ersten Briefkasten 112 entnommen und in ein erstes Transportfahrzeug 114 zur Weiterbeforderung übergeben. Das erste Transportfahrzeug 114 stellt eine zweite Beförderungsstation im Sinne der vorliegenden Erfindung dar. Das erste Transportfahrzeug 114 weist eine Schreib/Leseeinheit 114.1 auf, die in einem Leseschritt des Schritts 110.7 über eine drahtlose Verbindung den Inhalt der ersten RFID Einheit 109.4 liest.

Die Schreib/Leseeinheit 112.1 erstellt aus dem gelesenen Inhalt der ersten RFID Einheit 109.4 in einem zweiten Quittierungsschritt zunächst eine zweite Quittungsinformation Q2. Mit dieser zweiten Quittungsinformation Q1 wird der Eingang des Briefs 109 in dem ersten Transportfahrzeug 114 quittiert und dokumentiert. Dabei umfasst die zweite Quittungsinformation Q1 bevorzugt eine individuelle Kennzeichnung des Briefs 109, beispielsweise seine einmalige und eindeutige Seriennummer, den Zeitpunkt des Eingangs, eine individuelle Kennzeichnung des ersten Transportfahrzeugs 114, z. B. dessen einmalige und eindeutige Seriennummer, und eine Authentifizierungsinformation über dem Inhalt der zweiten Quittungsinformation Q2, beispielsweise eine digitale Signatur oder einen MAC des ersten Transportfahrzeugs 114.

Um eine zuverlässige und sichere automatisierte Offline Sendungsverfolgung zu ermöglichen, schreibt die zweite Schreib/Leseeinheit 114.1 in einem Speicherschritt des Schritts 110.7 über eine drahtlose Verbindung die zweite Quittungsinformation Q2 als zweite Beförderungsstationsinformation in die erste RFID Einheit 109.4. Die Schreib/Leseeinheit 112.1 stellt somit ebenfalls eine erfindungsgemäße Datenverarbeitungseinrichtung dar, mit der bestimmte Daten in die erste RFID Einheit 109.4 geschrieben werden können. Die zweite Quittungsinformation Q2 kann später als zweite Beförderungsstationsinformation aus der ersten RFID Einheit 109.4 ausgelesen werden, um die Beförderungshistorie des Briefs 109 zu rekonstruieren.

Es versteht sich hierbei, dass bei anderen Varianten der Erfindung auch vorgesehen sein kann, dass der erste Briefkasten zusätzlich zu der zweiten Quittungsinformation Q2 noch ähnlich der ersten Quittungsinformation Q1 eine weitere Quittungsinformation Q1' erzeugt, welche quittiert und protokolliert, dass der Brief den ersten Briefkasten verlassen hat.

In einem Schritt 110.8 wird der Brief 109 dann durch das Transportfahrzeug 114 in ein eine weitere Systemkomponente des Systems 101 darstellendes Briefverteilzentrum 116 zur Weiterbeforderung eingeliefert. Das Briefverteilzentrum 116 stellt eine dritte Beförderungsstation im Sinne der vorliegenden Erfindung dar. Das Briefverteilzentrum 116 weist eine Verarbeitungs- und Kommunikationseinheit 116.1 und eine damit verbundene Schreib/Leseneinheit 116.2 auf. In einem Leseschritt des Schritts 110.8 liest die Schreib/Leseneinheit 116.2 über eine drahtlose Verbindung den Inhalt der ersten RFID Einheit 109.4.

Die Leseneinheit 116.2 oder die Verarbeitungs- und Kommunikationseinheit 116.1 erstellt aus dem gelesenen Inhalt der ersten RFID Einheit 109.4 in einem dritten Quittierungsschritt zunächst eine dritte Quittungsinformation Q3. Mit dieser dritten Quittungsinformation Q3 wird der Eingang des Briefs 109 in dem Briefverteilzentrum 116 quittiert und dokumentiert. Dabei umfasst die dritte Quittungsinformation Q3 bevorzugt eine individuelle Kennzeichnung des Briefs 109, beispielsweise seine einmalige und eindeutige Seriennummer, den Zeitpunkt des Eingangs im Briefverteilzentrum 116, eine individuelle Kennzeichnung des Briefverteilzentrums 116, z. B. dessen einmalige und eindeutige Seriennummer, und eine Authentifizierungsinformation über dem Inhalt der dritten Quittungsinformation Q3, beispielsweise eine digitale Signatur oder einen MAC des Briefverteilzentrums 116.

Die so authentifizierte dritte Quittungsinformation Q3 wird dann über das Datennetz 107 von der Verarbeitungs- und Kommunikationseinheit 116.1 an die Datenzentrale 106 übermittelt und dort in der oben im Zusammenhang mit dem ersten Ausführungsbeispiel beschriebenen Weise zum Zwecke der Sendungsverfolgung zum Abruf über das Datennetz 107 bereit gestellt.

Um auch hier wieder - beispielsweise bei Ausfall der Verbindung zur Datenzentrale 106 - eine zuverlässige und sichere automatisierte Offline Sendungsverfolgung zu ermöglichen, schreibt die Schreib/Leseeinheit 116.2 in einem Speicherschritt des Schritts 110.8 über eine drahtlose Verbindung die dritte Quittungsinformation Q3 als dritte Beförderungsstationsinformation in die erste RFID Einheit 109.4. Die Schreib/Leseeinheit 116.2 stellt somit ebenfalls eine erfindungsgemäße Datenverarbeitungseinrichtung dar, mit der bestimmte Daten in die erste RFID Einheit 109.4 geschrieben werden können. Die dritte Quittungsinformation Q3 kann später als dritte Beförderungsstationsinformation aus der ersten RFID Einheit 109.4 ausgelesen werden, um die Beförderungshistorie des Briefs 109 zu rekonstruieren.

Es versteht sich hierbei wiederum, dass bei anderen Varianten der Erfindung auch vorgesehen sein kann, dass das erste Transportfahrzeug zusätzlich zu der dritten Quittungsinformation Q3 noch ähnlich der zweiten Quittungsinformation Q2 eine weitere Quittungsinformation Q2' erzeugt, welche quittiert und protokolliert, dass der Brief das erste Transportfahrzeug verlassen hat.

In einem Schritt 110.9 wird der Brief 109 dann an eine Sortiereinheit 116.3 des Briefverteilzentrums 116 übergeben, in welcher er in Abhängigkeit von dem Ergebnis des vorangehenden Leseschritts einen Sortiervorgang durchläuft, wie er oben im Zusammenhang mit dem ersten Ausführungsbeispiel beschrieben wurde, sodass diesbezüglich auf die obigen Ausführungen verwiesen wird.

In einen Schritt 110.10 erzeugt die Sortiereinheit 116.3 sortierte Briefstapel 117 für unterschiedliche Postbeförderer, die in einem Schritt 110.11 dann an zweite Transportfahrzeuge 118, 119 der unterschiedlichen Postbeförderer übergeben werden. Das jeweilige zweite Transportfahrzeug 118, 119 weist eine Schreib/Leseeinheit 118.1 bzw. 119.1 auf, die in einem Leseschritt des Schritts 110.11 über eine drahtlose Verbindung den Inhalt der ersten RFID Einheit 109.4 liest.

Die Schreib/Leseeinheit 118.1 erstellt aus dem gelesenen Inhalt der ersten RFID Einheit 109.4 in einem vierten Quittierungsschritt zunächst eine vierte Quittungsinformation Q4. Mit dieser vierten Quittungsinformation Q4 wird der Eingang des Briefs 109 in dem zweiten Transportfahrzeug 118 quittiert und dokumentiert. Dabei umfasst die vierte Quittungsinformation Q4 bevorzugt eine individuelle Kennzeichnung des Briefs 109, beispielsweise seine einmalige und eindeutige Seriennummer, den Zeitpunkt des Eingangs im Transportfahrzeug 118, eine individuelle Kennzeichnung des zweiten Transportfahrzeugs 118, z. B. dessen einmalige und eindeutige Seriennummer, und eine Authentifizierungsinformation über dem Inhalt der vierten Quittungsinformation Q4, beispielsweise eine digitale Signatur oder einen MAC des zweiten Transportfahrzeugs 118.

Um eine zuverlässige und sichere automatisierte Offline Sendungsverfolgung zu ermöglichen, schreibt die Schreib/Leseeinheit 118.2 in einem Speicherschritt des Schritts 110.11 über eine drahtlose Verbindung die vierte Quittungsinformation Q4 als vierte Beförderungsstationsinformation in die erste RFID Einheit 109.4. Die Schreib/Leseeinheit 118.2 stellt somit ebenfalls eine erfindungsgemäße Datenverarbeitungseinrichtung dar, mit der bestimmte Daten in die erste RFID Einheit 109.4 geschrieben werden können. Die vierte Quittungsinformation Q4 kann später als dritte Beförderungsstationsinformation aus der ersten RFID Einheit 109.4 ausgelesen werden, um die Beförderungshistorie des Briefs 109 zu rekonstruieren.

Das Sortierzentrum erzeugt zusätzlich zu der vierten Quittungsinformation Q4 noch ähnlich der dritten Quittungsinformation Q3 eine weitere Quittungsinformation Q3', welche quittiert und protokolliert, dass der Brief das Sortierzentrum verlassen hat. Diese wird ähnlich der dritten Quittungsinformation Q3 in der oben beschriebenen Weise an die Datenzentrale 106 übermittelt und zum Abruf bereit gestellt.

In einem Schritt 110.12 wird der Brief 109 dann in eine zweite Lagereinrichtung in Form eines zweiten Briefkastens 121 des Empfängers des Briefs 109 eingeworfen. Im vorliegenden Fall handelt es sich dabei um den Briefkasten der Behörde, an die der anwaltliche Schriftsatz 109.1 gerichtet ist. Der Briefkasten 121 weist eine Schreib/Lese- und Sendeeinheit **121.1** auf, die in einem Leseschritt des Schritts 110.12 über eine drahtlose Verbindung den Inhalt der ersten RFID Einheit 109.4 und der zweiten RFID Einheit 109.5 liest.

Die Schreib/Lese- und Sendeeinheit 121.1 erstellt aus dem gelesenen Inhalt der ersten RFID Einheit 109.4 und der zweiten RFID Einheit 109.5 in einem fünften Quittierungsschritt eine fünfte Quittungsinformation Q5. Mit dieser fünften Quittungsinformation Q5 wird der Eingang des Briefs 109 in dem zweiten Briefkasten 121 quittiert und dokumentiert. Dabei umfasst die fünfte Quittungsinformation Q5 bevorzugt eine individuelle Kennzeichnung des Briefs 109, beispielsweise seine einmalige und eindeutige Seriennummer, den Zeitpunkt des Eingangs im zweiten Briefkasten 121, eine individuelle Kennzeichnung des zweiten Briefkastens 121, z. B. dessen einmalige und eindeutige Seriennummer, die über dem Dokumenteninhalt erstellte zweite Authentifizierungsinformation SIG2 und eine Authentifizierungsinformation über dem Inhalt der fünften Quittungsinformation Q5, beispielsweise eine digitale Signatur oder einen MAC des zweiten Briefkastens 121. Um eine gerichtlich verwertbare fünfte Quittungsinformation Q5 zu generieren, weist der zweiten Briefkasten 121 ein entsprechend sicheres Zeitstempelmodul 121.1, welches in hinlänglich bekannter Weise als Beleg für den Zeitpunkt des Eingangs des Briefs 109 einen entsprechend manipulationssicheren Zeitstempel generiert, der in die fünfte Quittungsinformation Q5 einbezogen wird.

Die so authentifizierte fünfte Quittungsinformation Q5 wird dann von der Schreib/Lese- und Sendeeinheit 121.1 über das Datennetz 107 an die Datenzentrale 106 übermittelt und dort in der oben im Zusammenhang mit dem ersten Ausführungsbeispiel beschriebenen Weise zum Zwecke der Sendungsverfolgung bzw. Eingangsbestätigung zum Abruf über das Datennetz 107 bereit gestellt bzw. versandt.

Es versteht sich, dass vorgesehen sein kann, dass zudem einzelne oder sämtliche gespeicherten Quittungsinformationen Q1 bis Q4 aus der ersten RFID Einheit 109.4 ausgelesen und an die Datenzentrale 106 übermittelt werden, um dort die Transporthistorie des Briefs 109 zu komplettieren und zum Abruf zur Verfügung zu stellen.

Die über das Datennetz 107 aktiv an den PC 105 und/oder die Frankiermaschine 102 übermittelte fünfte Quittungsinformation Q5 kann dann über die Druckeinheit 102.5 der Frankiermaschine 102 oder den an den PC 105 angeschlossenen Drucker 108 - automatisch oder nach Bedarf - für die Akten des Absenders des Briefs 109 ausgedruckt werden.

Um auch hier wieder - beispielsweise bei Ausfall der Verbindung zur Datenzentrale 106 - eine zuverlässige und sichere automatisierte Offline Sendungsverfolgung zu ermöglichen, schreibt die Schreib/Lese- und Sendeeinheit 121.1 in einem Speicherschritt des Schritts 110.12 über eine drahtlose Verbindung die fünfte Quittungsinformation Q5 als fünfte Beförderungsstationsinformation in die erste RFID Einheit 109.4. Die Schreib/Leseeinheit 121.1 stellt somit ebenfalls eine erfindungsgemäße Datenverarbeitungseinrichtung dar, mit der bestimmte Daten in die erste RFID Einheit 109.4 geschrieben werden können. Die fünfte Quittungsinformation Q5 kann später als fünfte Beförderungsstationsinformation aus der ersten RFID Einheit 109.4 ausgelesen werden, um die Beförderungshistorie des Briefs 109 zu rekonstruieren.

Es versteht sich, dass bei Varianten der Erfindung mit einer reinen Offline Sendungsverfolgung vorgesehen sein kann, dass alle Quittungsinformationen Q1 bis Q5 nur in der ersten RFID Einheit gespeichert werden und die Transporthistorie des Briefs dann ausschließlich zu einem späteren Zeitpunkt rekonstruiert wird..

Die vorliegende Erfindung wurde vorstehend anhand von Beispielen eines Briefs beschrieben. Es versteht sich jedoch, dass sie auch in Verbindung mit beliebigen anderen Poststücken, wie Paketen oder dergleichen, zum Einsatz kommen kann.

## Patentansprüche

1. Verfahren zum Zuordnen einer Information zu einem Poststück, insbesondere zu einem Brief, **dadurch gekennzeichnet, dass**
- in einem Zuordnungsschritt dem Poststück eine elektronische erste Speichereinrichtung (9.4, 9.5, 109.4, 109.5) zugeordnet wird und
- in einem Speicherschritt, insbesondere über eine drahtlose Verbindung, eine erste Information in die erste Speichereinrichtung (9.4, 9.5; 109.4, 109.5) eingebracht wird, wobei die erste Speichereinrichtung (9.4, 9.5; 109.4, 109.5) insbesondere wenigstens eine RFID Speichereinheit umfasst.

2. Verfahren nach Anspruch 1, **dadurch gekennzeichnet, dass**
- das Poststück (9; 109) eine Außenhülle (9.2; 109.2) umfasst und die erste Speichereinrichtung (9.4; 109.4) in dem Zuordnungsschritt mit der Außenhülle (9.2; 109.2) verbunden wird
und/oder
- das Poststück (9; 109) eine Außenhülle (9.2; 109.2) und ein darin aufgenommenes Versandgut (9.1; 109.1) umfasst und die erste Speichereinrichtung (9.5; 109.5) in dem Zuordnungsschritt mit dem Versandgut (9.1; 109.1) verbunden wird.

3. Verfahren nach einem der vorhergehenden Ansprüche, **dadurch gekennzeichnet, dass** der Zuordnungsschritt zeitlich vor dem Speicherschritt erfolgt.

4. Verfahren nach einem der vorhergehenden Ansprüche, **dadurch gekennzeichnet, dass** der Speicherschritt erfolgt, während die erste Speichereinrichtung (9.4; 109.4) einer Frankiermaschine (2; 102) räumlich zugeordnet ist.

5. Verfahren nach einem der vorhergehenden Ansprüche, **dadurch gekennzeichnet, dass** die erste Information wenigstens eine dem Poststück (9; 109) zugeordnete erste Teilinformation umfasst.

6. Verfahren nach einem der vorhergehenden Ansprüche, **dadurch gekennzeichnet, dass** in einem Druckschritt ein dem Poststück (9; 109) zugeordneter, eine zweite Information umfassender Frankierabdruck (9.7; 109.7) erzeugt wird, wobei die erste Information und die zweite Information insbesondere in einer vorbestimmten Beziehung zueinander stehen.

7. Verfahren nach Anspruch 6, **dadurch gekennzeichnet, dass**
- die erste Information wenigstens eine erste Teilinformation umfasst und
- die zweite Information wenigstens eine zweite Teilinformation umfasst, wobei
- die erste Teilinformation in einer vorbestimmten Beziehung zur zweiten Teilinformation steht, insbesondere identisch mit der zweiten Teilinformation ist.

8. Verfahren nach einem der vorhergehenden Ansprüche, **dadurch gekennzeichnet, dass** die erste Information als eine erste Teilinformation
- eine auf wenigstens einen portorelevanten Parameter des Poststücks (9; 109) bezogene Information und/oder
- eine auf einen Zusatzdienst bei der Beförderung des Poststücks (9; 109) bezogene Information und/oder
- eine auf das für die Beförderung des Poststücks (9; 109) entrichtete oder zu entrichtende Porto bezogene Information und/oder
- eine auf den Absender des Poststücks (9; 109) bezogene Information und/oder
- eine auf den Empfänger des Poststücks (9; 109) bezogene Information und/oder
- eine auf den Beförderer des Poststücks (9; 109) bezogene Information und/oder
- eine auf den Inhalt des Poststücks (9; 109) bezogene Information
- eine auf den Ort der Durchführung des Speicherschritts und/oder den Zeitpunkt der Durchführung des Speicherschritts und/oder den für die Durchführung des Speicherschritts Verantwortlichen bezogene Information
umfasst.

9. Verfahren nach Anspruch 8, **dadurch gekennzeichnet, dass** die erste Information eine die erste Teilinformation authentifizierende Authentifizierungsinformation umfasst.

10. Verfahren zur Beförderung von Poststücken, insbesondere Briefen, bei dem das Poststück (109) in einem ersten Beförderungsschritt wenigstens eine erste Beförderungsstation (112, 114, 116, 118, 119, 121) durchläuft, **dadurch gekennzeichnet, dass** in einem ersten Speicherschritt eine auf das Durchlaufen der ersten Beförderungsstation (112, 114, 116, 118, 119, 121) bezogene erste Beförderungsstationsinformation in eine dem Poststück (109) zugeordnete elektronische erste Speichereinrichtung (109.4, 109.5) eingebracht wird, wobei die erste Speichereinrichtung (9.4, 9.5; 109.4, 109.5) insbesondere wenigstens eine RFID Speichereinheit umfasst.

11. Verfahren nach Anspruch 10, **dadurch gekennzeichnet, dass** die Beförderungsstationsinformation
- eine auf die erste Beförderungsstation (112, 114, 116, 118, 119, 121) bezogene Information, insbesondere eine auf den Ort und/oder den Betreiber der ersten Beförderungsstation (112, 114, 116, 118, 119, 121) bezogene Information,
und/oder
- eine auf den Zeitpunkt des Durchlaufens der ersten Beförderungsstation (112, 114, 116, 118, 119, 121) bezogene Information
umfasst.

12. Verfahren nach Anspruch 10 oder 11, **dadurch gekennzeichnet, dass**
- das Poststück (109) wenigstens eine der ersten Beförderungsstation (112, 114, 116, 118, 119, 121) nachfolgende zweite Beförderungsstation durchläuft und
- in einem zweiten Speicherschritt eine auf das Durchlaufen der zweiten Beförderungsstation (112, 114, 116, 118, 119, 121) bezogene zweite Beförderungsstationsinformation in eine dem Poststück (109) zugeordnete elektronische erste Speichereinrichtung (109.4,109.5) eingebracht wird.

13. Verfahren zur Beförderung von Poststücken, insbesondere Briefen, **dadurch gekennzeichnet, dass**
- in einem Leseschritt eine erste Information aus einer einem Poststück (9; 109) zugeordneten elektronischen ersten Speichereinrichtung (9.4, 9.5; 109.4, 109.5), die insbesonderedie wenigstens eine RFID Speichereinheit umfasst, gelesen wird und
- in einem Beförderungsschritt eine Beförderung des Poststücks (9; 109) in Abhängigkeit von dem Ergebnis des Leseschritts erfolgt und/oder
- in einem Quittierungsschritt eine Quittierungsinformation in Abhängigkeit von dem Ergebnis des Leseschritts generiert wird.

14. Verfahren nach Anspruch 13, **dadurch gekennzeichnet, dass** die Beförderung des Poststücks (9; 109) in dem Beförderungsschritt ausgelöst durch das Ergebnis des Leseschritts erfolgt.

15. Verfahren nach Anspruch 13 oder 14, **dadurch gekennzeichnet, dass**
- das Lesen der ersten Information in dem Leseschritt durch eine Lagereinrichtung (12; 112) für Poststücke, insbesondere einen Briefkasten, erfolgt und
- in dem Beförderungsschritt eine Weiterbeförderung der Poststücke (9; 109) aus der Lagereinrichtung (112) ausgelöst wird, sobald
- in dem Leseschritt das Erreichen einer vorgegebenen Anzahl von Poststücken (9; 109) in der Lagereinrichtung (112) erfasst wird oder
- eine vorgegebene Zeitspanne seit dem Erfassen des Eingangs eines Poststücks (9; 109) in der Lagereinrichtung (112) in einem vorangehenden Leseschritt abgelaufen ist.

16. Verfahren nach einem der Ansprüche 13 bis 15, **dadurch gekennzeichnet, dass** die erste Information in dem Leseschritt aus der ersten Speichereinrichtung (9.4, 9.5; 109.4, 109.5) über eine drahtlose Verbindung ausgelesen wird.

17. Verfahren nach einem der Ansprüche 13 bis 16, **dadurch gekennzeichnet, dass** die erste Information dem Poststück (9; 109) vor dem Leseschritt mit einem Verfahren nach einem der Ansprüche 1 bis 10 zugeordnet wird.

18. Verfahren nach einem der Ansprüche 13 bis 17, **dadurch gekennzeichnet, dass** in einem Berechnungsschritt eine Berechnung des Beförderungsentgelts für das Poststück (9; 109) erfolgt, wobei die Berechnung des Beförderungsentgelts in Abhängigkeit von dem Vorhandensein der ersten Speichereinrichtung (9.4, 9.5; 109.4, 109.5) und/oder dem Informationsgehalt der in der ersten Speichereinrichtung (9.4, 9.5; 109.4, 109.5) gespeicherten ersten Information erfolgt.

19. Datenverarbeitungseinrichtung zum Zuordnen einer Information zu einem Poststück (9; 109), insbesondere zu einem Brief, **dadurch gekennzeichnet, dass** eine Schreibeinrichtung (2.3; 102.3) zum, insbesondere drahtlosen, Beschreiben einer mit dem Poststück (9; 109) verbundenen oder zu verbindenden elektronischen ersten Speichereinrichtung (9.4, 9.5; 109.4, 109.5), insbesondere zum Beschreiben wenigstens einer RFID Speichereinheit der ersten Speichereinrichtung (9.4, 9.5; 109.4, 109.5), mit einer ersten Information vorgesehen ist.

20. Datenverarbeitungseinrichtung nach Anspruch 19, **dadurch gekennzeichnet, dass** sie
- als Frankiermaschine (2; 102) ausgebildet ist oder
- als Komponente einer Lagereinrichtung (112, 121) für Poststücke, insbesondere als Komponente eines Briefkastens ausgebildet ist, oder
- als Komponente einer Transporteinrichtung (114, 116, 118, 119) für Poststücke, insbesondere als Komponente eines Transportfahrzeugs oder einer Sortieranlage, ausgebildet ist.

21. Datenverarbeitungseinrichtung nach Anspruch 19 oder 20, **dadurch gekennzeichnet, dass**
- das Poststück (9) eine Außenhülle (9.2) umfasst und eine Verbindungseinrichtung (2.2) zum Verbinden der ersten Speichereinrichtung (9.4) mit der Außenhülle (9.2) vorgesehen ist,
und/oder
- eine Ausgabeeinrichtung (2.2) zum Ausgeben von mit dem Poststück (9) zu verbindenden, eine erste Speichereinrichtung (9.4) tragenden Trägereinrichtungen (9.3) vorgesehen ist, wobei die Ausgabeeinrichtung (2.2) insbesondere zum Verbinden der Trägereinrichtung (9.3) mit dem Poststück (9), insbesondere zum Verbinden der Trägereinrichtung (9.3) mit dem Poststück (9) vor dem Beschreiben der ersten Speichereinrichtung (9.4), ausgebildet ist.

22. Datenverarbeitungseinrichtung nach einem der Ansprüche 19 bis 21, **dadurch gekennzeichnet, dass** die erste Information wenigstens eine dem Poststück (9; 109) zugeordnete erste Teilinformation umfasst.

23. Datenverarbeitungseinrichtung nach einem der Ansprüche 19 bis 22, **dadurch gekennzeichnet, dass** eine Druckeinrichtung (2.4; 102.4) zum Aufbringen eines eine zweite Information umfassenden Frankierabdrucks (9.7; 109.7) auf das Poststück (9; 109) vorgesehen ist, wobei die erste Information und die zweite Information insbesondere in einer vorbestimmten Beziehung zueinander stehen.

24. Datenverarbeitungseinrichtung nach Anspruch 23, **dadurch gekennzeichnet, dass**
- die erste Information wenigstens eine erste Teilinformation umfasst und
- die zweite Information wenigstens eine zweite Teilinformation umfasst, wobei
- die erste Teilinformation in einer vorbestimmten Beziehung zur zweiten Teilinformation steht, insbesondere identisch mit der zweiten Teilinformation ist.

25. Datenverarbeitungseinrichtung nach einem der Ansprüche 19 bis 24, **dadurch gekennzeichnet, dass** die erste Information als eine erste Teilinformation
- eine auf wenigstens einen portorelevanten Parameter des Poststücks (9; 109) bezogene Information und/oder
- eine auf einen Zusatzdienst bei der Beförderung des Poststücks (9; 109) bezogene Information und/oder
- eine auf das für die Beförderung des Poststücks (9; 109) entrichtete oder zu entrichtende Porto bezogene Information und/oder
- eine auf den Absender des Poststücks (9; 109) bezogene Information und/oder
- eine auf den Empfänger des Poststücks (9; 109) bezogene Information und/oder
- eine auf den Beförderer des Poststücks (9; 109) bezogene Information und/oder
- eine auf den Inhalt des Poststücks (9; 109) bezogene Information
- eine auf den Ort der Durchführung des Speicherschritts und/oder den Zeitpunkt der Durchführung des Speicherschritts und/oder den für die Durchführung des Speicherschritts Verantwortlichen bezogene Information
umfasst.

26. Datenverarbeitungseinrichtung nach Anspruch 25, **dadurch gekennzeichnet, dass** die erste Information als eine die erste Teilinformation authentifizierende Authentifizierungsinformation umfasst.

27. Datenverarbeitungseinrichtung nach einem der Ansprüche 19 bis 26, **dadurch gekennzeichnet, dass** sie zur Berechnung des Beförderungsentgelts für das Poststück (9; 109) in Abhängigkeit von dem Vorhandensein der ersten Speichereinrichtung (9.4, 9.5; 109.4, 109.5) und/oder dem Informationsgehalt der in der ersten Speichereinrichtung (9.4, 9.5; 109.4, 109.5) gespeicherten ersten Information ausgebildet ist.

28. System zur Beförderung von Poststücken, insbesondere von Briefen, mit einer Mehrzahl von Systemkomponenten zur Beförderung von Poststücken (9; 109), **dadurch gekennzeichnet, dass**
- eine erste Systemkomponente (12, 14, 16, 18, 19, 21, 112, 114, 116, 118, 119, 121) eine Leseeinrichtung (12.1, 14.1, 16.2, 18.1, 19.1, 21.1; 112.1, 114.1, 116.2, 118.1, 119.1, 121.1) zum Lesen einer ersten Information aus einer einem Poststück (9; 109) zugeordneten elektronischen ersten Speichereinrichtung (9.4, 9.5; 109.4, 109.5) aufweist und
- die erste Systemkomponente (12, 16; 112, 116) oder eine mit der ersten Systemkomponente (12; 112) verbindbare zweite Systemkomponente (6; 106) zur Beeinflussung der Beförderung des Poststücks (9; 109) in Abhängigkeit von dem Ergebnis des Lesevorgangs der Leseeinrichtung (12.1, 16.2; 112.1, 116.2) ausgebildet ist
und/oder
- die erste Systemkomponente (12, 14, 16, 18, 19, 21, 112, 114, 116, 118, 119, 121) oder eine mit der ersten Systemkomponente (12, 14, 16, 18, 19, 21, 112, 114, 116, 118, 119, 121) verbindbare zweite Systemkomponente (6; 106) zum Erstellen einer Quittierungsinformation in Abhängigkeit von dem Ergebnis des Lesevorgangs der Leseeinrichtung (12.1, 14.1, 16.2, 18.1, 19.1, 21.1; 112.1, 114.1, 116.2, 118.1, 119.1, 121.1) ausgebildet ist.

29. System nach Anspruch 28, **dadurch gekennzeichnet, dass** die zweite Systemkomponente (6; 106) zur Auslösung der Beförderung des Poststücks ausgelöst durch das Ergebnis des Lesevorgangs ausgebildet ist.

30. System nach Anspruch 28 oder 29, **dadurch gekennzeichnet, dass** die zweite Systemkomponente (6; 106) eine mit der ersten Systemkomponente (12, 14, 16, 18, 19, 21; 112, 116, 121) über eine, insbesondere drahtlose, Kommunikationsverbindung verbindbare Datenzentrale ist.

31. System nach einem der Ansprüche 28 bis 30, **dadurch gekennzeichnet, dass**
- die erste Systemkomponente (12; 112) eine Lagereinrichtung für Poststücke (9; 109), insbesondere einen Briefkasten, ist und
- die zweite Systemkomponente (6; 106) zum Auslösen einer Weiterbeförderung der Poststücke (9; 109) aus der Lagereinrichtung (12; 112) bei
- Erfassung des Erreichens einer vorgegebenen Anzahl von Poststücken (9) in der Lagereinrichtung (12; 112) durch die Lagereinrichtung (12;112) oder
- Ablauf einer vorgegebenen Zeitspanne seit dem Erfassen des Eingangs eines Poststücks (9; 109) in der Lagereinrichtung (12; 112)
ausgebildet ist.

32. System nach einem der Ansprüche 28 bis 31, **dadurch gekennzeichnet, dass** die Leseeinrichtung (12.1, 14.1, 16.2, 18.1, 19.1, 21.1; 112.1, 114.1, 116.2, 118.1, 119.1, 121.1) zum Lesen der ersten Information aus der ersten Speichereinrichtung (9.4, 9.5; 109.4, 109.5) über eine drahtlose Verbindung ausgebildet ist, wobei die erste Speichereinrichtung (9.4, 9.5; 109.4, 109.5) insbesondere wenigstens eine RFID Speichereinheit umfasst und die Leseeinrichtung (12.1, 14.1, 16.2, 18.1, 19.1, 21.1; 112.1, 114.1, 116.2, 118.1, 119.1, 121.1) insbesondere zum Lesen der ersten Information aus der wenigstens einen RFID Speichereinheit ausgebildet ist.

33. System nach einem der Ansprüche 28 bis 32, **dadurch gekennzeichnet, dass** als eine dritte Systemkomponente eine Datenverarbeitungseinrichtung (2; 12.1, 14.1, 16.2, 18.1, 19.1, 21.1; 102, 112.1, 114.1, 116.2, 118.1, 119.1, 121.1) nach einem der Ansprüche 19 bis 27 vorgesehen ist.

34. System nach einem der Ansprüche 28 bis 33, **dadurch gekennzeichnet, dass**
- eine Mehrzahl vierter Systemkomponenten (12, 14, 16, 18, 19, 21; 112, 114, 116, 118, 119, 121) mit jeweils einer Leseeinrichtung (12.1, 14.1, 16.2, 18.1, 19.1, 21.1; 112.1, 114.1, 116.2, 118.1, 119.1, 121.1) zum Lesen einer ersten Information aus einer einem Poststück (9; 109) zugeordneten elektronischen ersten Speichereinrichtung (9.4, 9.5; 109.4, 109.5) vorgesehen ist und
- eine mit den vierten Systemkomponenten (12, 14, 16, 18, 19, 21; 112, 114, 116, 118, 119, 121) verbindbare fünfte Systemkomponente (6; 106) zur Erstellung einer Beförderungsfortschrittsinformation für einzelne Poststücke (9; 109) aus den Ergebnissen der Lesevorgänge in den vierten Systemkomponenten (12, 14, 16, 18, 19, 21; 112, 114, 116, 118, 119, 121) ausgebildet ist.

35. Systemkomponente für ein System zur Beförderung von Poststücken, **dadurch gekennzeichnet, dass** sie als erste Systemkomponente (12, 14, 16, 18, 19, 21; 112, 114, 116, 118, 119, 121) eines Systems (1; 101) nach einem der Ansprüche 28 bis 34 ausgebildet ist.

36. Systemkomponente nach Anspruch 35, **dadurch gekennzeichnet, dass** sie Lagereinrichtung (12, 21; 112, 121) für Poststücke, insbesondere als Briefkasten, ausgebildet ist.

37. Poststück, insbesondere Brief, **dadurch gekennzeichnet, dass** es eine elektronische erste Speichereinrichtung (9.4, 9.5; 109.4, 109.5) umfasst, die insbesondere wenigstens eine RFID Speichereinheit umfasst, wobei
- eine Außenhülle vorgesehen (9.2; 109.2) ist und die erste Speichereinrichtung (9.4; 109.4) mit der Außenhülle (9.2; 109.2) verbunden ist
- und/oder
- eine Außenhülle (9.2; 109.2) und ein darin aufgenommenes Versandgut (9.1; 109.1) vorgesehen sind und die erste Speichereinrichtung (9.5; 109.5) mit dem Versandgut (9.1; 109.1) verbunden ist.

38. Poststück nach Anspruch 37, **dadurch gekennzeichnet, dass** in der ersten Speichereinrichtung (9.4, 9.5; 109.4, 109.5) eine erste Information gespeichert ist, die wenigstens eine dem Poststück (9; 109) zugeordnete erste Teilinformation umfasst.
